(19) Europäisches Patentamt
European Patent Office
Office européen des brevets

(11) Publication number: **0 303 960 B1**

(12) # EUROPEAN PATENT SPECIFICATION

(45) Date of publication of patent specification: **15.04.92**

(51) Int. Cl.5: **H04N 1/387**, H04N 1/413

(21) Application number: **88112995.1**

(22) Date of filing: **10.08.88**

Divisional application 91108964.7 filed on 10/08/88.

(54) **Method of and apparatus for setting original in image scanner.**

(30) Priority: **20.08.87 JP 205113/87**
**28.09.87 JP 240932/87**

(43) Date of publication of application:
**22.02.89 Bulletin 89/08**

(45) Publication of the grant of the patent:
**15.04.92 Bulletin 92/16**

(84) Designated Contracting States:
**DE FR GB**

(56) References cited:
**EP-A- 0 206 307**
**GB-A- 2 160 669**
**GB-A- 2 168 567**
**US-A- 3 604 846**
**US-A- 4 733 304**

(73) Proprietor: **Dainippon Screen Mfg. Co., Ltd.**
**1-1, Tenjinkitamachi Teranouchi-Agaru**
**4-chome Horikawa-Dori**
**Kamikyo-ku Kyoto 602(JP)**

(72) Inventor: **Yamamoto, Masahiro Dainippon Screen Mfg. Co., Ltd.**
**1-1, Tenjinkitamachi Teranouchi-agaru**
**4-chome**
**Horikawa-dori Kamikyo-ku Kyoto(JP)**
Inventor: **Hirosawa, Makoto Dainippon Screen Mfg. Co., Ltd.**
**1-1, Tenjinkitamachi Teranouchi-agaru**
**4-chome**
**Horikawa-dori Kamikyo-ku Kyoto(JP)**

(74) Representative: **Goddar, Heinz J., Dr. et al**
**FORRESTER & BOEHMERT Franz-Joseph-Strasse 38**
**W-8000 München 40(DE)**

EP 0 303 960 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of and an apparatus for setting an original in an image scanner employed in a process scanner system and the like.

In a process scanner system, the image of an original is read with an image scanner for each scanning line, thereby to obtain an image data (e.g. as in EP-A-0 206 307). The image data is subjected to an image data processing, and then delivered to an exposure control unit employed for controlling an exposure beam supplied to a photosensitive material. Therefore, the image scanning process should be carried out under two important requirements, one of which is that the original should be properly set in the image scanner, and the other is that various parameters or "scan data" required in the scanning and the image data processing should be set at their respective optimum values so as to obtain a desired reproduced image.

With respect to the former requirement, a conventional technique is so conducted that a desired area is clipped from the original and it is pasted on a layout sheet or a transparent sheet such as a transparent resin film. The sheet is then set on an image scanner. In another conventional technique, the whole of the original is pasted on a layout sheet so that the desired area of the original is located in a trimming region previously indicated on the layout sheet. The layout sheet is set in the image scanner, and then the image of the desired area is read for each scanning line.

In the conventional techniques, the layout sheet or the transparent sheet must be thrown away after use, and it is uneconomical. Another disadvantage is that careful handling of the original is required, since the original is used not only in the set on the image reader but also in a layout process on a desitizer, and it is sometimes damaged due to a careless handling thereof.

On the other hand, in order to meet the latter requirement in the parameter setting, a conventional technique is so conducted that optimum values of the parameters such as optical densities of highlight and shadow points are manually set in the image scanner. Accordingly, the parameter values with respect to an original are sometimes mistaked for those to another original. To prevent such a mistake, the parameter values may be transmitted from a setup apparatus to the image scanner with on-line transmission. However, such a on-line system is complicated and high-priced.

The present invention is set out in the claims to which attention is now directed. It is intended for a system and method of setting an original in an image scanner for reading an image of a desired area on the original through an image scanning process

Accordingly, an object of the present invention is to provide a method for setting an original in an image scanner which is attained in a high efficiency and at a low cost.

Another object of the present invention is to prevent an original from being damaged through a careless handling thereof.

Further another object of the present invention is to set a scan data in an image scanner without mistaking the scan data for that to another original.

Further another object is to provide an original holder suitable for holding an original.

Yet another object of the present invention is to provide a scan table capable of accepting an original holder and having a function for changing the direction of the original holder.

These and other objects, features, aspects and advantages of the present invention will become more apparent from the following detailed description of the present invention when taken in conjunction with the accompanying drawings.

Fig. 1 is a schematic diagram showing an image scanner and pheripheral devices according to an preferred embodiment of the present invention,

Fig. 2 is a plan view of an original holder,

Fig. 3 is a diagram showing various coordinates on a digitizer,

Fig. 4 is a flow chart showing a process of obtaining a coordinate data and an angle data,

Fig. 5A and Fig. 5B are schematic diagrams showing a relationship between the original holder and an image projected on a layout sheet,

Fig. 6 is a perspective view of a scan table,

Fig. 7 is a flow chart showing a process of setting the original holder in the scan table,

Fig. 8 through Fig. 10 are coordinate diagrams showing coordinates on the scan table,

Fig. 11 is a perspective view of an original holder according to another preferred embodiment of the present invention,

Fig. 12 is a block diagram showing the image scanner and pheripheral apparatuses,

Fig. 13 is a diagram showing the state where a scan data is read from a memory provided in the original holder,

Fig. 14 is a partial view of an original holder according to further another embodiment of the present invention,

Fig. 15 is a diagram showing a magnetic head provided in the scan table, and

Fig. 16 and Fig. 17 are diagrams showing an application of the present invention to a drum type scanner.

Fig. 1 is a schematic view of an image scanner 19 employed in a process scanner system of a flat bed type, to which a preferred embodiment of the present invention is applied. An original holder 11 for holding an original 1 has a lower frame 12 and an upper frame 13 connected with each other through hinges 40a and 40b (see Fig. 2) provided between the respective edges of the frames 12 and 13, so that the frames 12 and 13 can relatively rotate around the hinge axis. In the respective windows surrounded by the frames 12 and 13, transparent plates 14a and 14b such as glass plates are mounted, respectively. The original 1 is placed on the transparent plate 14a in an arbitrary direction, and the frames 12 and 13 are closed, whereby the original 11 is hold between the transparent plates 14a and 14b. As shown in Fig. 2, a pair of holes 41a and 41b is formed through the frames 12 and 13, which are used for adjusting the original holder 11 to a rotary table 26 shown in Fig. 1, as will be described later. In the adjacent corners of the upper frame 12, small windows 42a and 42b are formed, respectively, and small transparent disks are mounted in the windows 42a and 42b, respectively. A reference mark such as a cross mark is provided in each of the transparent disks 42a and 42b. Small windows alinged with the windows 42a and 42b respectively are formed in the lower frame 12, although they are not shown in Fig. 2.

The original holder 11 holding the original 1 is carried to a projector 10 (Fig. 1) having a light source head 15 and a lens 16. When the original holder 11 is loaded between the light source head 15 and the lens 16 and the light source in the light source head 15 is turned on, the image of the original 1 is projected on a layout sheet 18 placed on a digitizer 17. The reference marks in the transparent discs 42a and 42b are also projected on the layout sheet 18. In order to obtain a clear image on the layout sheet 18, the light source is so constructed as to emit a light enough to penetrate through the original 1. If the original 1 is a transparent film original, the light may be relatively weak.

The layout sheet 18 is not fixed on the digitizer 18, so that the layout sheet 18 can be moved on the digitizer 17. On the layout sheet 18, a closed line or curve expressing a trimming frame 43 shown in Fig. 3 is previously drawn. The trimming frame 43 indicates an image area to be extracted from the original 1, and it is previously determined according to a layout plan of a reproduced image.

The position of the layout sheet 18 and the value of the magnification factor in the image projection is so adjusted that the image of the desired area on the original 1 is magnified or reduced to fit the region indicated by the trimming frame 43 on the layout sheet 18. Change of the magnification factor can be attained through adjustment of the distance between the original holder 11 and the lens 16, and that between the lens 16 and the digitizer 17. Preferably, the projector 15 is an auto-focus projector in which the original holder 11 and the lens 16 move together to maintain an image forming position regardless of the value of the magnification factor, and the current value of the magnification factor is automatically outputted as a magnification factor data.

Fig. 3 shows the state where the image of the original 1 is projected on the layout sheet 18, and the image 1P in the desired area on the original 1 is fitted in the trimming frame 43. Although the image of the original 11 is illustrated as the characters "A", "B" and "C" in Fig. 1 through Fig. 3, for convenience of illustration, the image is usually a photographic image in practice. The process described above is also indicated in Fig. 4A as the process steps 301-303.

For the following description, three of two dimensional Cartesian coordinate systems are defined as follows:

- (x,y): a coordinate system defined on the digitizer 17,
- (X,Y): a coordinate system defined on the layout sheet 18,
- ($\alpha$, $\beta$): a coordinate system defined on the imaginary profile 11a of the original holder 11 on the layout sheet 18.

These coordinate systems are hereinafter referred as "x-y system", "X-Y system", and "$\alpha$-$\beta$ system", respectively.

With the digitizer 17 and a digitizer tablet 17a shown in Fig. 1, the coordinates of an apex $\underline{A}$ (Fig. 3) of the layout sheet 18 and those of a point $\underline{B}$ arbitrarily selected on the X-axis extending along the lower edge of the layout sheet 18 are detected in x-y system. When the detected coordinates of the points $\underline{A}$ and $\underline{B}$ are expressed as ($x_1$, $y_1$) and ($x_2$, $y_2$), respectively, the incline angle $\theta$ of the layout sheet 18 from the digitizer 17 is obtained through the following expressions (1a)-(1c). This is also shown in Fig. 4A, as the process steps 304 and 305.

$$\theta = \tan^{-1} \{(y_2 - y_1)/x_2 - x_1)\}, \text{ for } x_2 = x_1, \quad (1a)$$
$$\theta = \tfrac{\pi}{2}, \text{ for } x_2 = x_1 \text{ and } y_2 > y_1, \quad (1b)$$
$$\theta = -\tfrac{\pi}{2}, \text{ for } x_2 = x_1 \text{ and } y_2 < y_1. \quad (1c)$$

In order to calculate the respective values of the angle $\theta$ and other parameters described later, the process scanner shown in Fig.1 is provided with a computer unit 2 having a CPU 3 and a memory 4, which is electrically connected with the digitizer 17.

Using the value of the angle $\theta$ obtained through the expressions (1a)-(1c), the following coordinate transformation formulas (2a) and (2b) for transforming coordinates in x-y system to those in X-Y system is obtained, and data expressing the formulas (2a) and (2b) is stored in the memory 3.

$$X = (x-x_1)\cos\theta + (y-y_1)\sin\theta \quad (2a)$$
$$Y = -(x-x_1)\sin\theta + (y-y_1)\cos\theta \quad (2b)$$

Then, the coordinates of the projected reference marks C and D in the projected windows 42a and 42b are detected in the x-y system, as $(x_3, y_3)$ and $(x_4, y_4)$, respectively. These coordinates are transformed to the X-Y system through the formulas (2a) and (2b), to obtain $(X_3, Y_3)$ and $(X_4, Y_4)$. The incline angle $\phi$ of the imaginary profile 11a from the layout sheet 18 is obtained as follows (the process steps 306-308):

$$\phi = \tan^{-1}\{(Y_4-Y_3)/(X_4-X)\}, \text{ for } X = X, \quad (3a)$$
$$\phi = \tfrac{\pi}{2}, \text{ for } X_3 = X_4 \text{ and } Y_4 \text{ and } Y_4 > Y_3, \quad (3b)$$
$$\phi = -\tfrac{\pi}{2}, \text{ for } X_3 = X_4 \text{ and } Y_4 \text{ and } Y_4 < Y_3. \quad (3c)$$

In the next process step, positions of the trimming frame 43 drawn on the layout sheet 18 are detected. when the trimming frame 43 has a shape of a rectangle FEGH, for example, the respective positions of the apexes, F, E, G and H are detected in x-y system with the digitizer 17 and the tablet 17a in the x-y system, and then transformed to the X-Y system, to obtain $E(X_5, Y_5)$, $F(X_5, Y_6)$, $G(X_7, Y_7)$ and $H(X_5, Y_8)$.

When the original 1 is subjected to the image reading process with the image scanner 19 after the setting process is completed, the image in the trimming frame 43 should be extracted from the image of the original 1. The image scanner 19 is so constructed as to read the image for each scanning line, and the layout of a reproduced image on a record medium such as a photosensitive film is indicated by the image layout on the layout sheet 18. Therefore, in the image reading process which will be described later, the original 1 is set in the image scanner 19 under the condition where the respective directions of X and Y are parallel with the main scanning direction and the subscanning direction, respectively. Accordingly, a scan region on the original 1 to be scanned with the image scanner 19 should have a shape of a rectangle having lateral sides parallel with the X-direction and vertical sides parallel with the Y-direction.

With respect to the image 1P shown in Fig.3, the scan region thereof may be specified as a rectangular region $S_1$ circumscribing the trimming frame 43 and having lateral sides parallel with the X-direction and the vertical sides parallel with the Y-direction. Alternatively, another rectangular region $S_2$ surrounding the rectangular region $S_1$ with a margin a may be employed as the scanning region. The value of the margin a may be previously determined to be stored in the memory 4 as a fixed value, or may be arbitrarily determined and inputted by an operator for each original. In the preferred embodiment, the latter rectangular region $S_2$ is employed, rather than the former $S_1$.

The respective coordinates $(X_9, Y_9)$ and $(X_{10}, Y_{10})$ of the left-bottom apex I and the right-top apex J in the rectangle $S_2$ are obtained through the expressions (4a) - (4d).

$$X_9 = \min(X_5, X_5, X_7, X_5) - a \quad (4a)$$
$$Y_9 = \min(Y_5, Y_6, Y_7, Y_8) - a \quad (4b)$$
$$X_{10} = \min(X_5, X_5, X_7, X_5) + a \quad (4c)$$
$$Y_{10} = \min(Y_5, Y_6, Y_7, Y_8) + a \quad (4d)$$

where the symbols "min" and "max" indicate the minimum and maximum values in the parenthesis, respectively.

The coordinates $(X_9, Y_9)$ and $(X_{10}, Y_{10})$ in the X-Y system are transformed to the coordinates $(\alpha_9, \beta_9)$ and $(\alpha_{10}, \beta_{10})$, respectively, through the coordinate transformation formulas (5a) and (5b).

$$\alpha = (X - X_3)\cos\phi + (Y - Y_3)\sin\phi \quad (5a)$$
$$\beta = -(X - X_3)\sin\phi + (Y - Y_3)\cos\phi \quad (5b)$$

These steps are shown in Fig. 4B, as the process steps 309-311. Note that the angle $\phi$ is just an incline angle at which the rectangular region $S_2$ is inclined from a reference line interconnecting the reference marks in the projected windows 42a and 42b.

Such a rectangle circumscribing a trimming frame can be obtained even when the shape of the trimming frame is not a rectangle but another shape such as a circle, an ellipse, and a polygon other than a rectangle.

Fig.5A is a partial plane view of the original holder 11 in which an imaginary profile line 11b corresponding to the imaginary profile line 11a on the layout sheet 18 is illustrated. The imaginary profile line 11b is defined as an imaginary rectangle whose neighbouring two apexes P and Q coincide with the reference marks in the windows 42a and 42b, respectively. Although a trimming frame 43a and a rectangular region $S_{20}$ corresponding to the trimming frame 43 and the rectangular region $S_2$, respectively, are illustrated in Fig.5A, these are not actual lines on the original holder 11, but imaginary lines indicated for reference.

When the magnification factor in the projector 15 has a value M, all of the images in the original holder 11 are magnified by the magnification factor M on the layout sheet 18. Fig.5B is a partial diagram showing the region on the layout sheet 18 corresponding to that shown in Fig.5A. The apexes C and D correspond to the apexes P and Q, respectively, and the apexes I and J of the rectangle $S_2$ correspond to the apexes K and L, respectively. The ratio of the image size of Fig.5A to that of Fig.5B has a value equal to the magnification factor M.

When another two dimensional Cartesian coordinate system (u, v) is defined on the original holder 11, the respective coordinates ($u_9$, $v_9$) and ($u_{10}$, $v_{10}$) of the apexes K and L are obtained through the expressions (a process step 312 in Fig. 4B):

$u_9 = \alpha_9 / M$ (6a)

$v_9 = \beta_9 / M$ (6b)

$u_{10} = \alpha_{10} / M$ (6c)

$v_{10} = \beta_{10} / M$ (6d)

As will be clearly understood later, the rectangular region $S_{20}$ corresponds to the scan region on the original 1.

The data expressing the respective values of the parameters $\phi$, ($u_9$, $v_9$) and ($u_{10}$, $v_{10}$) are stored in the memory 4 as reference data, and delivered to the image scanner 19 (the process step 313). The delivery of the reference data may be attained through on-line communication, or off-line communication with a memory such as a floppy disc, a magnetic tape or the like. Alternatively, the data may be printed on a data sheet, with which the operator inputs the data to the image scanner 19 through his manual operation.

In response to the delivery of the reference data, a control unit CU (Fig.1) provided in the image scanner 19 operates to set the respective values of the angle $\phi$ and the coordinates ($u_9$, $v_9$) and ($u_{10}$, $v_{10}$) therein. The data with respect to the magnification factor M delivered from the projector 15 is also set in the control unit CU as one of the reference data. The control unit CU has a microcomputer, and operates according to a program previously stored therein.

It should be noted that the rectangular region $S_{20}$ is inclined from a reference line interconnecting the reference marks in the windows 42a and 42b, at the angle $\phi$.

Fig.6 is a perspective view of a scan table 20 provided in the top surface of the image scanner 19, in which a part of the table 20 is broken away for convenience of illustration. The scan table 20 is shaped as a hollow box having circular windows $W_1$ and $W_2$ on the upper and lower surfaces thereof. A pair of sliders 21 is provided on the lower surface of the scan table 20, and is fitted with a pair of parallel guide rails 22 mounded in the image scanner 19, whereby the scan table 20 is supported with the guide rails 22.

In parallel with the guide rails 22, a screw rod 23 connected to a drive mortor (not shown) is provided. A nut 24 is fixed on the lower surface of the scan table 20, and the screw rod 23 is inserted therein. When the drive motor is enabled to rotate the screw rod 23, the scan table 20 slides the sliders 22 along the longitudinal direction of the sliders 22.

On the inner edge of the scan table 20, a circular guide member 25 is provided, thereby to support a rotary table 26 through a circular slider 27 fixed to the lower surface of the rotary table 26. The rotary table 26 is a disc having a rectangular window RW into which the original holder 11 can be inserted. The rotary table 26 is inserted into the upper window $W_1$ of the scan table 20. A circular rack 28 is also fixed to the lower surface of the rotary table 26 concentrically with the circular slider 27. In place of the circular rack 28, three or more of rack pieces may be provided to align along the circular slider 27 at regular intervals.

In the scan table 20, a mortor 30 for rotating a gear 29 is provided. The gear 29 is fitted with the circular rack 28, and therefore, the rotary table 26 can rotate in horizontal plane with the gear drive. The rotary table 26 may rotate within an angle range ± 90° with respect to a reference position, or alternatively, it may rotate within a full angle range, i.e., 360°.

A rotary encoder 32 having a gear 31 is also provided in the scan table 20, the gear 31 being fitted with the circular gear 28. When the rotary table 26 rotates, the rotary encoder 32 generates an electric pulse upon every rotation of the rotary table 26 by a small constant angle. A rotation angle detector other than the rotary encoder 32 may be employed in place of the rotary encoder 32. Preferably, the rotation angle detector is operable to detect the rotation angle at a high accuracy.

Angle indexes 33 are marked around the window $W_1$ on the upper surface of the scan table 20, while an indication mark 34 is provided at a position in the edge of the rotary table 26. In the rectangular window RW provided at the central area of the rotary table 26, a step member 35 is formed along the inner pheripheral edge of the window $W_1$. A pair of pins 36a and 36b are upwardly provided on the neighbouring corners on the step member 35, which are inseted into the holes 41a and 41b (Fig.2) when the original holder 11 is set into the rectangular window RW. With the combination of the pins 36a and 36b and the holes 41a and 41b, the position of the original holder 11 in the rectangular window RW is precisely restricted. The small windows 42a and 42b shown in Fig.2 are so positioned in the original holder 11 that the windows 42 and 42b are not covered with the step member 35 when the original holder 11 is set in the rectangular window RW.

The image scanner 19 has a photoelectric scan mechanism consisting of a mirror 37, a lens 38, a linear image sensor 39, and others. The photoelectric scan mechanism is positioned under the scan table 20. A light source (not shown) is provided above or below the scan table 20, to emit a light to the window $W_1$. In an image reading operation which will be described later, a line image in the original 1 is projected on the linear image sensor 39 through the mirror 37 and the lens 38. The linear image sensor 39 is a linear CCD array, for example, and serially converts the line image projected thereon into an electric image signal, to achieve a main scanning of the image of the original 1. The scan table 20 is linearly moved along the direction SY through a rotation of the screw rod 23, to achieve a subscanning. Accordingly, the direction SX parallel to the longitudinal direction of the linear image sensor 39 is a main scanning direction, and the direction SY parallel to the screw rod 23 is a subscanning direction, in the image scanning. Through the combination of the main scanning and the subscanning, the two dimensional image of the original 1 is photoelectrically read.

The operation for setting the original holder 11 having the original 1 in the image scanner 19 is conducted as follows:

After the setting operation of the reference data in the control unit CU, the original holder 11 holding the original 1 is set in the rectangular window RW in the rotary table 26 (the process step 401 in Fig.7), without changing the holding position of the original 1 in the original holder 11. The positional adjustment between the original holder 11 and the rectangular window RW is achieved through the combination of the pins 36a and 36b and the holes 41a and 41b.

Then, the rotary table 26 is so rotated that the indication mark 34 indicates the zero angle point or the "0" mark in the indexes 33 (the process step 402). A two dimensional coordinate system (U, V) shown in Fig.8 is so defined on the image scanner 19 that the U-axis and the V-axis are parallel to the main scanning direction SX and the subscanning direction SY, respectively. The center O of the rotation of the rotary table 26 has coordinates ($U_0$, $V_0$) in the U-V system, and has coordinates ($u_0$, $v_0$) in the u-v system defined on the original holder 11. The values of these coordinates can be previously found, since they are constant values regardless of the position of the original 1 in the original holder 11. These values are previously stored in a memory included in the control unit CU.

After adjusting the original holder 11 to the zero angle point, the rotary table 26 is rotated by the angle ($+\phi$) through the motor drive with the motor 30 (the process step 403). The rotation is conducted under the control with the control unit CU, where the control unit CU monitors the output signal of the rotary encoder 32, and when the output signal indicates that the rotary table 26 is rotated by the angle ($+\phi$), the motor drive is stopped.

Fig. 9 shows the state where the rotation of the rotary table 11 by ($+\phi$) is completed. Note that the angle $\phi$ is defined as an angle formed by the X-axis (Fig. 5A) and the u-axis, and the X-axis corresponds to the bottom edge of the layout sheet 18. Therefore, when the original 1 held in the original holder 11 is rotated by ($+\phi$) according to the rotation of the rotary table 26, the angular relationship between the original 1 and the main scanning direction SX becomes identical to that between the original 1 and the bottom edge of the layout sheet 18.

On the other hand, the rectangular region $S_2$ in Fig. 3 is so defined that its top and bottom sides are parallel to the X-direction, and therefore, the rectangular region $S_{20}$ in Fig. 5A corresponding to the region $S_2$ have top and bottom sides parallel to the X-axis. Further, the main scanning direction SX and the U-axis in the image reading process corespond to the X-axis in the layout sheet 18 which indicates a reproduced image layout. Therefore, in the state shown in Fig. 9, the top and bottom sides of the rectangular region $S_{20}$ are parallel to the U-axis and the main scanning direction SX, and the right and left sides of the same are parallel to the V-axis and the subscanning direction SY.

In the next process step 404, which may be prior to the steps 401-403, respective coordinates ($u_9$, $v_9$) and ($u_{10}$, $v_{10}$) of the points K and L in the u-v system are transformed to coordinates ($U_9$, $V_9$) and $U_{10}$, $V_{10}$) in the U-V system, respectively, through the coordinate transformation formulas (7a) and (7b).

$$U = (u - u_0) \cos \phi - (v - v_0) \sin \phi + U_0 \quad (1a)$$
$$V = (u - u_0) \sin \phi + (v - v_0) \cos \phi + V_0 \quad (1b)$$

The values of $U_9$ and $U_{10}$ define the main scanning range of the rectangular region or the scan region $S_{20}$, and the values $V_9$ and $V_{10}$ define the subscanning range of the scan region $S_{20}$. The transformation according to the formulas (7a) and (7b) are performed in the control unit CU, and the coordinate values thus obtained are stored in the memory provided in the control unit CU, whereby the original setting process according to an preferred embodiment of the present invention is completed.

After setting the original 1 in the image scanner 19, the photoelectric scan mechanism is enabled so that the image in the scan region $S_{20}$ is read for each scanning line (the process step 405). The range of the reading is restricted with the coordinate values $U_9$, $U_{10}$, $V_9$ and $V_{10}$, where the main scanning is attained in the range from $U_9$ to $U_{10}$, while the subscanning range is that from $V_9$ to $V_{10}$. The image data obtained in the image scanner 19 is processed in the processing circuits (not shown), to be delivered to an exposure unit for exposing a photosensitive film for each scanning line according to the processed image data (the process step 406). As a result, a reproduced image in accordance with the image layout on the layout sheet 18 is obtained on the photosensitive film. The image in the scan region $S_{20}$ is recorded on the film at the desired incline angle $\phi$ from the bottom edge of the film. The preferred embodiment described above may be modified as follows:

Although the center of the scan region $S_{20}$ in the original 1 coincidents with the center $\underline{O}$ of the rotation of the rotary table 26 and that of the original holder 11 in the example shown in Fig. 9, they may be different with each other, and the above described process can be also applied to such a case. When it is desired that the center of the scan region $S_{20}$ is always located at the point $(U_0, V_0)$ which is registered in the control unit as the rotation center, the scan table 20 is so constructed as to be translationally moved on the image scanner 19 in the U-direction and/or V-direction with the translational drive mechanism such as a linear actuator. The value of the translational movement or displacement required for bringing the center of the scan region $S_{20}$ to the point $(U_0, V_0)$ is estimeted as:

$U_0 - (U_9 + U_{10})/2$, for the U-direction (8a)
$V_0 - (V_9 + V_{10})/2$, for the V-direction (8b)

Through the movement, the scan region $S_{20}$ shown in Fig. 10 is displaced to the region $S_{20}$ whose center coincidents with the point $(U_0, V_0)$ corresponding to the registered rotation center $\underline{O}$, and apexes $\underline{K}$ and $\underline{L}$ are moved to the points $\underline{K}'$ and $\underline{L}'$, respectively, so that the center of the scan region $S_{20}$ is moved to the registered rotation center. Note that the registered rotation center $(U_0, V_0)$ is not the real rotation center after the scan region $S_{20}$ is translated, but the initial rotation center before the translation, since the real rotation center is also translated together with the scan region $S_{20}$.

The motor 30 and the rotary encoder 32 may be omitted in the scan table 20. In such a case, the rotary table 26 is manually rotated by the angle $\phi$ while observing the indication mark 34 and the indexes 33, to adjust the directions of the region $S_{20}$ to the scanning directions.

The reference marks in the original holder 11 may be provided on the transparent plate 14a or 14b rather than in the windows 42a and 42b. Further, the value of the magnification fastor $\underline{M}$ may be obtained through the process where the distance between the reference marks projected on the layout sheet 18 is detected by the digitizer 17, and a ratio of the detected distance to the real distance between the reference marks on the original holder 11 is calculated, since the ratio corresponds to the value of the magnification factor $\underline{M}$. Therefore, a projector without a function for indicating the value of the magnification factor M may be employed, in place of the projector 15.

According to the preferred embodiment, only a desired region on the original is scanned, and a time required for scanning the image of the original can be saved. The data transmission time in the image scanner is also saved. Therefore, the availability of the image scanner is improved. The control unit in the image scanner may not comprise an image data memory having large storage capacity, since only the image data of the scan region $S_{20}$ is obtained through the image scanning. In other words, the image data memory can storage image data with respect to many originals. After an original is once set in the original holder, it is not removed from the original holder untill the image scanning is completed, so that the original is not damaged. The handling of the original is easy, since the original is held in the original holder without being exposed to the exterior of the original holder. The setup process can be attained even by an operator not skilled in the setup work, and an error in the setup process can be prevented. Further, the original holder can be used repeatedly for different originals, and it is quite economical.

Fig. 11 shows an original holder 110 according to another embodiment of the present invention. The original holder 110 has frames 120 and 130 connected with each other through hinges 40c and 40d so that the frames 120 and 130 may be opened and closed around the hinges 40c and 40d. Transparent plates 14a and 14b are provided in the frames 120 and 130, respectively, similarly to the first embodiment. An original 1 is put on the transparent plate 14a, and holded between the transparent plates 14a and 14b by closing the frames 14a and 14b.

A cassette 121 is mounted on the side edge of the frame 120 to be integrated with the same. In the cassette 121, a data storage device 60 having a memory 61, a battery 62 and a connector 63 is provided. The memory 61 is semiconductor RAM, to which an electric power is supplied from the battery 62. The connector 63 is electrically coupled with the memory 61 so that the memory 61 can communicate with the exterior of the original holder 110 through the connector 63. The connector 63 may be a pin connector whose connection face or connection mouth is exposed on the side edge of the cassette 121. When the memory 61 is a volatile memory such as an EEPROM, the battery 62 may be omitted.

Before setting the original holder 110 in the image scanner, the original holder 110 is carried to a preliminary data processor 51 (Fig. 12) and a setup apparatus 52, in serial. The preliminary data processor 51 and the setup apparatus 52 have connectors 51a and 52a, respectively, each of which fits the connector 63 in the original holder 110. After the original holder 110 is electrically connected with the preliminary data processor 51 through the coupling of the connectors 63 and 51a, a data prepared in the preliminary data processor 51 is delivered from the preliminary data processer 51 to the memory 61 through the connector coupling, to be stored in the memory 61. Then, the original holder 110 is disconnected from the preliminary data processor 51, and electrically connected with the setup apparatus 52 through the coupling of the connectors 63 and 52b, whereby another data prepared in the setup apparatus 52 is transmitted to and stored in the memory 61. There data delivered from the preliminary data processor 51 and the setup apparatus and stored in the memory 61 are scan data required for scanning the image of the original 1 and separating the image data into color components, which are generated in the processor 51 and the apparatus 52 on the basis of the image of the original 1 and a scanning plan prepared by the operator. The scan data may have the following data:

(I) Original disclimination data, such an an original number, the title of an original, and the like;

(II) Trimming coordinate data representing the position of a desired scan region on the original 1 in a coordinate system defined on the original holder 110;

(III) Data representing an angle, by which the rotary table 26 is to be rotated so that the edges of the scan region are parallel with the scanning directions;

(IV) Data representing the value of the magnification factor determined according to a layout of the image on the image recording film;

(V) The coordinate data with respect to highlight and shadow points selected on the original 1;

(VI) Color separation data indicating:

(i) the respective optical densities of the highlight and shadow points.

(ii) the respective halftone dot area rate at the highlight and shadow points,

(iii) the degree of sharpness enhancement,

(iv) the gradation curve,

(v) the respective quantities of UCR and GCR,

(vi) the color correction character, and

(vii) the output mode indicating a number of record images in a recording unit in which a plurality of color component images are recorded in parallel;

(VII) Halftone dot condition data indicating:

(i) the screen ruling,

(ii) the screen angle, and

(iii) the shape of the halftone dot, such as a square dot, a chain dot; and

(VIII) Data representing a history of data arrangement, such as:

(i) the date and the time at which the scan data is corrected, and

(ii) the date and the time when the original 1 is reproducted.

After the storage operation, the original holder 110 being disconnected from the setup apparatus 52 is carried to the image scanner 19, to be set on the rotary table 26, as shown Fig. 13. The image scanner 19 has a signal line 53 connected to the control unit CU. A connector 54 capable to fit the connector 63 in the original holder 110 is provided a the end of the signal line 53. After the connectors 53 and 63 are coupled with each other, the control unit CU shown starts to fetch the scan data from the memory 63 through the coupling of the connectors 63 and 54 and the signal line 53, so that the scan data is automatically set in the control unit CU.

After disconnecting the connector 54 from the connector 63, the rotary table 26 is rotated by the angle $\phi$ similarly to the first embodiment, and then, the image on the scan region in the original 1 is scanned. The image data thus obtained is processed in the control unit CU, and delivered to a recording unit or another image processors. The image scanning and the image data processing are conducted under the condition indicated by the scan data.

Fig. 14 is a partial view of an original holder 210 according to further another embodiment of the present invention. Similarly to the original holders 11 and 110, the original holder 210 is provided with a pair of frames 220 and 230 connected with each other through a hinge 40 a pair of hinges 40 one of which is shown in Fig. 14. Transparent plates 14a and 14b are fixed in the frames 220 and 230, respectively. On the lower edge surface of the lower frame 220, a magnetic tape 64 is fixed along the edge of the frame 220. Each of the preliminary data processor and the setup apparatus is so constructed as to have a magnetic head for recording the scan data on the magnetic tape 64, in place of the pin connector 51a, 51b. Preferably, the magnetic head is also operable to read a data already stored in the magnetic tape 64. The original holder 210 holding the original 1 is carried to the preliminary data processor and the setup apparatus, in serial. The scan data are recorded on the magnetic tape 64 through the magnetic heads from the preliminary data processor and the setup apparatus.

The image scanner 19 is provided with a magnetic head for reading the scan data from the magnetic tape 64, in place of the connector 53a.

As shown in Fig. 15, the magnetic head 65 and a driving device 66 for driving the magnetic head 65 in the direction $D_H$ are provided in the step member 35 in the rotary table 26 so that the magnetic head 65 can scan the surface of the magnetic tape 64 when the original holder 210 is set in the rectangular window RW in the rotary table 26.

The scan data read with the magnetic head 65 is fetched to the control unit CU, to be referred in the image scanning of the original 1. Preferably, the magnetic head 65 is operable to record a data on the magnetic tape 54 so that the scan data on the magnetic tape 54 can be corrected, if necessary.

In the original holders 110 and 210, when a plurality of originals is held in the original holder 110 or 210, the respective scan data as to the originals may be recorded in the memory 61 or the magnetic tape 64.

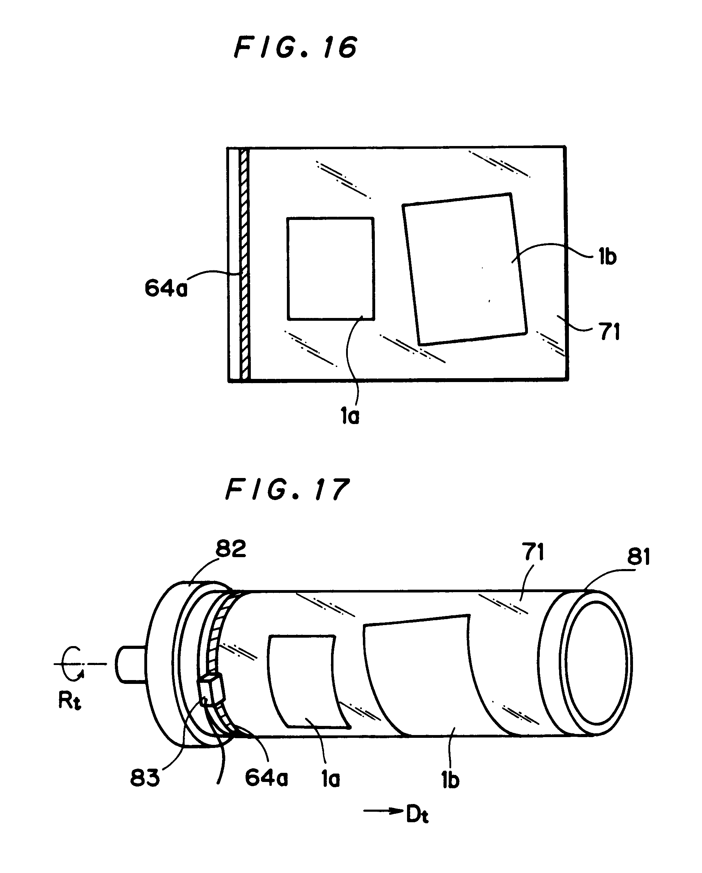

The present invention may be applied to a drum type scanner. In such a case, originals 1a and 1b shown in Fig. 16 are pasted on a transparent base sheet 71 provided with a magnetic tape 64a. On the magnetic tape 64a, a scan data is recorded with the preliminary data processor and the setup apparatus. The magnetic tape 64a is fixed on the edge surface of the base sheet 71 along the side edge thereof. The base sheet 71 is wound on a plastic transparent drum 81 as shown in Fig. 17, so that the magnetic tape 64a partially or fully surround the drum 81 along the circular direction $R_t$. The drum 81 supported with a flange 82 is rotated in the direction $R_t$,and the scan data is read with a magnetic head 83 fixed in the body of a drum type scanner, to be used for controlling the image scanning and image data processing. Image scanning process itself is attained by rotating the drum 81 while reading the prespective images of originals 1a and 1b with a pickup head (not shown) being moved to the direction $D_t$.

When the originals 1a and 1b are set on the surface of the drum 81 without the base sheet 71, the magnetic tape 64a may be fixed on the flange 82 or an edge part of the drum 81 to partially or fully surround the same.

According to the preferred embodiments shown in Fig. 12 through Fig. 18, the scan data are stored in the memory or the magnetic tape provided in the original holder, and therefore, it can be prevented that scan data to an original is mistaked for that to another original. Management of the scan data is easy, since the scan data and the original are paired in the original holder. Further, the transmission of the original data from the preliminary data processor and the setup apparatus to the image scanner can be attained without complex process or a high-priced transmission apparatus.

The present invention may be applied to a monochrome process scanner, and other image scanner employed for scanning an image of an original to read the same.

Although the present invention has been described and illustrated in detail, it is clearly understood that the same is by way of illustration and example only and is not to be taken by way of limitation, the scope of the present invention being limited only by the terms of the appended claims.

The features disclosed in the foregoing description, in the claims and/or in the accompanying drawings may, both separately and in any combination thereof, be material for realising the invention in diverse forms thereof.

## Claims

**1.** A method of setting a scan data in an image scanner (19) for reading an image of an original (1), said scan data including an information required for scanning said original (1) with said image scanner (19) to read said image, said method comprising the steps of:

(a) preparing an original holder means (110) capable of holding said original (1),

(b) setting said original (1) in said original holder maeans (110) so that said original (1) is held by said original holder means (110), and

(c) setting said original holder means (110) holding said original (1) in said image scanner (19), characterized by the steps of:

(d) storing said scan data with respect to said original (1) in a memory means (61, 64) provided in said original holder means (110), and

(e) reading said scan data stored in said memory means (61) with data read means (3) provided in said image scanner (19), to set said image data in said image scanner (19).

**2.** A method of claim 1, characterized in that

said image scanner (19) is a flat bed type scanner,

said original holder means (110) comprises:

first and second frame members (120, 130) connected with each other through a hinge means (40) at respective edges of said first and second frame members (120, 130), and

transparent plate members (14) provided in windows (w) surrounded by said first and second frame members (120, 130), respectively,

said memory means (61) is attached to said second frame member (130), and

the step (b) comprises the step of:
(b-1) setting said original (1) between said transparent plate members (14).

**3.** A method of claim 1, characterized in that
said image scanner (19) is a drum type image scanner,
said original holder means comprises a base sheet (71);
said memory means (64a) comprises a magnetic tape provided on an edge of said base sheet (71),
the step (b) comprises the step of:
(b-1) pasting said original (1) on said base sheet (71),
the step (c) comprises the step of:
(c-1) winding said base sheet (71) on a drum (81) under the condition where said magnetic tape (64a) is so located as to partially or fully surround said drum (81), and
the step (e) comprises the step of:
(e-1) rotating said drum (81) around a drum axis of said drum (81) while reading said scan data from said magnetic tape (64a) with a magnetic head (83) provided in said drum type image scanner (19), to set said scan data in said drum type image scanner (19).

**4.** An image scanning system for scanning an image of an original (1) to read said image according to a scan data indicating a scanning condition for reading said image, said image scanning system comprising:
(a) an original holder (110) capable of holding said original (1),
(b) a scan data generating means (51, 52) for generating said scan data on the basis of said image and a scanning plan prepared by an operator, and
(c) an image scanner (19) for scanning said image of said original (1) having:
(c-1) means (20) for accepting said original holder (110) holding said original (1),
(c-2) an image scanning means (39) for scanning said image of said original (1) which is held by said original holder (110) received by said accepting means (20), to read said image for each scanning line,
characterized by
(a-1) a memory means (61, 64) in said original holder (110),
(b-1) a data write means (51a, 52a) comprised in said data generating means (51, 52) for writing said scan data to said memory means (61, 64) in said original holder (110),
(c-3) a data read means (54) for reading a scan data stored in said memory means (61, 64) in said original holder (110); and
(c-4) a scan control means (2) for controlling said image scanning means (39) according to said scan data.

**5.** An image scanning system in accordance with claim 4, characterized in that
(a-2) said original holder (110) comprises a holding means (14, 120, 130) for holding said original (1), and
(a-3) said memory means (61, 64) are attached to a peripheral portion of said holding means (14, 120, 130) and capable of storing said scan data.

**6.** An image scanning system in accordance with claim 4 or 5, characterized in that
said original holder (110) further comprises:
(a-4) a first connector (63) electrically coupled to said memory means (61), a connection face of said first connector being exposed to the exterior of said original holder (110),
said scan data generating means (51, 52) comprises:
(b-2) a second connector (51a, 52a) capable of being connected with said first connector (63) so that said scan data is delivered from said scan data generating means (51, 52) to said memory means (61, 64) through a connection of said first and second connectors (63; 51a, 52a), and
said data read means (54) comprises:
(c-3-1) a third connector capable of being connected with said first connector (63) so that said scan data is read from said memory means (61, 64) through a connection of said first (63) and third (54) connectors.

**7.** An image scanning system in accordance with claim 5, characterized in that
said memory means comprises:
(a-3-1) a magnetic tape (64a),
said scan data generating means (51, 52) comprises:
(b-3) a first magnetic head (83) for writing said scan data on said magnetic tape (64a), and
said data read means (54) comprises:
(c-3-2) a second magnetic head (83) for reading said scan data on said magnetic tape (64a).

**8.** An image scanning system in accordance with claim 5, 6 or 7, chararcterized in that

said holding means (14; 120, 130) comprises:

(a-2-1) first and second frame members (120, 130) connected with each other through a hinge means (40) at respective edges of said first and second frame members, and

(a-2-2) transparent plate members (14) provided in windows surrounded by said first and second frame members (120, 130), respectively.

**9.** An image scanning system in accordance with claim 4, characterized in that

said accepting means (20) comprises a scan table having:

(c-1-1) a hollow box member having a window (w), and

(c-1-2) a rotary table (26) which is so mounted in said window (w) as to rotate around a center of said rotary table (26), said window (w) having a shape corresponding to the shape of said original holder (110) holding said original (1), whereby said original (1) held in said original holder (110) can be set into said window (w) and rotated with said rotary table (26).

**10.** An image scanning system in accordance with claim 9, characterized in that

said scan table (20) further comprises:

(c-1-3) a rotary drive mechanism (29) provided in said hollow box member for rotating said rotary table (26) with a motor (30), and

(c-1-4) an angle detector (32) provided in said hollow box member for detecting a rotation angle of said rotary table (26) from a predetermined direction defined on said hollow box member.

**11.** An image scanning system in accordance with claim 9 to 10 characterized in that

angular indexes (33) are marked on said scan table (20) around said window (w), and

an indication mark (34) is provided on an edge of said rotary table (26), whereby a rotation angle of said rotary table (26) can be found by observing what angular index within said angular indexes (33) is indicated by said indication mark (34).

**12.** An image scanning system in accordance with claim 4, characterized in that

said original holder comprises:

(a-4) a drum body (81) around which said original (1) is to be wound, and

(a-5) a memory (64a) provided on said drum body (81) and capable to store said scan data.

**13.** An image scanning system in accordance with claim 12, characterized in that

said memory comprises:

a magnetic tape (64a) wound on said drum body (81).

## Revendications

**1.** Procédé d'établissement des données de balayage dans un appareil de balayage (19) pour lire l'image d'un original (1), lesdites données comprenant une information requise pour le balayage dudit original (1) avec ledit appareil de balayage (19) pour lire ladite image, ledit procédé comprenant les étapes suivantes :

a) la préparation d'un support d'original (110) pouvant maintenir ledit original (1),

b) le placement dudit original (1) sur ledit support d'original (110) de façon à ce que ledit original soit maintenu par ledit support d'original (110),

c) le placement dudit support d'original (110) maintenant ledit original (1) dans ledit appareil de balayage (19),

procédé caractérisé par les étapes suivantes :

d) le stockage desdites données de balayage dudit original (1) dans une mémoire (61, 64) prévue sur ledit support d'original (110) et

e) la lecture desdites données de balayage stockées dans ladite mémoire (61) par un moyen de lecture de données (3) prévu dans ledit appareil de balayage (19) pour installer lesdites données d'image dans ledit appareil de balayage (19).

**2.** Procédé selon la revendication 1, caractérisé en ce que ledit appareil de balayage (19) est un "scanneur" du type à marbre plat, ledit support d'original (110) comprenant des premier et second cadres (120, 130) raccordés l'un à l'autre par une articulation (40) sur des bords respectifs desdits premier et second cadres (120, 130) et des plaques transparentes (14) prévues sur des fenêtres (w) entourées par lesdits premier et second cadres respectifs (120, 130), ladite mémoire (61) étant fixée audit second cadre (130) et l'étape b) comprenant une étape :

b-1) de placement dudit original (1) entre lesdites plaques transparentes (14).

**3.** Procédé selon la revendication 1, caractérisé en ce que ledit appareil de balayage (19) est un "scanneur" du type à tambour, ledit support d'original comprenant une feuille de base (71), ladite mémoire (64a) comprenant une bande magnétique prévue sur un bord de ladite feuille de base (71), l'étape b) comprenant une étape :

b-1) de collage dudit original (1) sur ladite feuille de base (71),

l'étape c) comprenant des étapes :

c-1) d'enroulement de ladite feuille de base (71) sur un tambour (81) avec la condition que ladite bande magnétique (64a) soit placée de façon à entourer partiellement ou complètement ledit tambour (81) et

l'étape e) comprenant une étape :

e-1) de mise en rotation dudit tambour (81) autour d'un axe dudit tambour (81) tout en lisant lesdites données de balayage à partir de ladite bande magnétique (64a) par une tête magnétique (83) prévue sur ledit "scanneur" (19) du type à tambour pour établir lesdites données de balayage dans ledit "scanneur" (19) du type à tambour.

**4.** Dispositif de balayage d'image pour le balayage de l'image d'un original (1) afin de lire ladite image selon des données de balayage indiquant une condition de balayage pour la lecture de ladite image, ledit dispositif de balayage comprenant :

a) un support d'original (110) pouvant maintenir ledit original (1),

b) un générateur de données de balayage (51, 52) générant lesdites données de balayage sur la base de ladite image et d'un plan de balayage préparé par un opérateur et

c) un appareil de balayage (19) pour balayer ladite image dudit original (1) comprenant :

c-1) un moyen (20) pour recevoir ledit support d'original (110) maintenant ledit original (1),

c-2) un moyen de balayage (39) pour balayer ladite image dudit original (1) qui est maintenu par ledit support d'original (110) reçu par ledit moyen de réception (20) pour lire ladite image pour chaque ligne de balayage,

dispositif caractérisé par :

a-1) une mémoire (61, 64) sur ledit support d'original (110),

b-1) un moyen d'écriture de données (51a, 52a) compris dans ledit générateur de données (51, 52) pour écrire lesdites données de balayage dans ladite mémoire (61, 64) dudit support d'original (110),

c-3) un moyen de lecture de données (54) pour lire les données de balayage stockées dans ladite mémoire (61, 64) dudit support d'original (110) et

c-4) une commande de balayage (2) pour commander ledit moyen de balayage (39) selon lesdites données de balayage.

**5.** Dispositif de balayage selon la revendication 4, caractérisé en ce que :

a-2) ledit support d'original (110) comprend un moyen de support (14, 120, 130) pour maintenir ledit original (1) et

a-3) ladite mémoire (61, 64) est fixée à la partie périphérique dudit moyen de support (14, 120, 130) et peut stocker lesdites données de balayage.

**6.** Dispositif de balayage selon la revendication 4 ou 5, caractérisé en ce que ledit support d'original (110) comprend de plus :

a-4) un premier raccord (63) couplé électriquement à ladite mémoire (61), une face de raccordement dudit premier raccord étant exposée à l'extérieur dudit support d'original (110),

ledit générateur de données de balayage (51, 52) comprenant :

b-2) un second raccord (51a, 52a) pouvant être connecté audit premier raccord (63) de façon à ce que lesdites données de balayage soient délivrées par ledit générateur de données de balayage (51, 52) à ladite mémoire (61, 64) par connexion desdits premier et second raccords (63; 51a, 52a) et

ledit moyen de lecture de données (54) comprenant :

c-3-1) un troisième raccord pouvant être connecté audit premier raccord (63) de façon à ce que lesdites données de balayage soient lues à partir de ladite mémoire (61, 64) par une connexion desdits premier (63) et troisième (54) raccords.

**7.** Dispositif de balayage selon la revendication 5, caractérisé en ce que ladite mémoire comprend :

a-3-1) une bande magnétique (64a),

ledit générateur de données de balayage (51, 52) comprenant :

b-3) une première tête magnétique (83) écrivant lesdites données de balayage sur ladite bande magnétique (64a) et

ledit moyen de lecture de données (54) comprenant :

c-3-2) une seconde tête magnétique (83) pour la lecture desdites données de balayage sur ladite bande magnétique (64a).

**8.** Dispositif de balayage selon la revendication 5, 6 ou 7, caractérisé en ce que ledit moyen de maintien (14; 120, 130) comprend :

a-2-1) des premier et second cadres (120, 130) raccordés l'un à l'autre par une articulation (40) sur des bords respectifs desdits premier et second cadres et

a-2-2) des plaques transparentes (14) prévues sur des fenêtres entourées par lesdits premier et second cadres respectifs (120, 130).

**9.** Dispositif de balayage selon la revendication 4, caractérisé en ce que le moyen de réception (20) comprend une table de balayage comprenant:

c-1-1) une boite creuse munie d'une fenêtre (w) et

c-1-2) une table tournante (26) montée dans ladite fenêtre (w) de façon à tourner autour d'un centre de ladite table tournante (26), ladite fenêtre (w) possédant une forme correspondant à celle dudit support d'original (110) maintenant ledit original (1), ledit original (1) maintenu dans ledit support d'original (110) pouvant être ainsi placé dans ladite fenêtre (w) et mis en rotation avec ladite table tournante (26).

**10.** Dispositif de balayage selon la revendication 9, caractérisé en ce que ladite table de balayage (20) comprend de plus :

c-1-3) un mécanisme d'entraînement en rotation (29) prévu sur ladite boite creuse pour faire tourner ladite table tournante (26) avec un moteur (30) et

c-1-4) un capteur d'angle (32) prévu sur ladite boite creuse pour détecter un angle de rotation de ladite table tournante (26) à partir d'une direction prédéterminée définie sur ladite boite creuse.

**11.** Dispositif de balayage selon la revendication 9 ou 10, caractérisé en ce que des repères angulaires (33) sont marqués sur ladite table de balayage (20) autour de ladite fenêtre (w) et une marque d'indication (34) est prévue sur un bord de ladite table tournante (26), un angle de rotation de ladite table tournante (26) pouvant être ainsi trouvée par observation du repère angulaire, compris dans lesdits repères angulaires (33), indiqué par ladite marque d'indication (34).

**12.** Dispositif de balayage selon la revendication 4, caractérisé en ce que ledit support d'original comprend :

a-4) un corps de tambour (81) autour duquel ledit original (1) doit être enroulé et

a-5) une mémoire (64a) prévue sur ledit corps de tambour (81) et pouvant stocker lesdites données de balayage.

**13.** Dispositif de balayage selon la revendication 12, caractérisé en ce que ladite mémoire comprend une bande magnétique (64a) enroulée sur ledit corps de tambour (81).

## Patentansprüche

**1.** Verfahren zum Setzen von Abtastdaten in einem Bildabtaster (19) zum Lesen eines Bildes einer Vorlage (1), wobei die Abtastdaten eine Information beinhalten, die zum Abtasten der Vorlage (1) mittels des Bildsensors (19) zum Lesen des Bildes erforderlich ist, und wobei die Methode die folgenden Schritte aufweist:

a) Vorbereiten eines Vorlagehalters (110), der zum Tragen der Vorlage (1) geeignet ist,

b) Aufbringen der Vorlage (1) auf den Vorlagehalter (110) derart, daß die Vorlage (1) von dem Vorlagehalter (110) getragen wird, und

c) Einsetzen des die Vorlage (1) tragenden Vorlagehalters (110) in den Bildabtaster (19),

gekennzeichnet durch die folgenden Schritte:

d) Speichern der Abtastdaten der Vorlage (1) in einem in dem Vorlagehalter (110) vorgesehenen Speicher (61, 64) und

e) Lesen der in dem Speicher (61) gespeicherten Daten mittels eines in dem Bildabtaster (19) vorgesehenen Datenleser (3), um die Bilddaten in dem Bildabtaster (19) zu setzen.

**2.** Verfahren nach Anspruch 1, dadurch gekennzeichnet, daß

der Bildabtaster (19) ein Abtaster vom Flachbetttyp ist,

der Vorlagehalter (110) aufweist:

erste und zweite Rahmenelemente (120, 130), die miteinander über ein Scharnier (40) an den jeweiligen Kanten des ersten und des zweiten Rahmenelements (120, 130) verbunden sind und

transparente Plattenelemente (14), die in Fenstern (w), die von dem ersten Rahmenelement (120) bzw. zweiten Rahmenelement (130) umgeben werden, vorgesehen sind,

daß Speicherelement (61) an dem zweiten Rahmenelement (130) angebracht ist und

der Schritt (b) die folgenden Schritte aufweist:

(b-1) Setzen der Vorlage zwischen die transparenten Plattenelemente.

**3.** Verfahren nach Anspruch 1, dadurch gekennzeichnet, daß
der Bildsensor (19) ein Bildsensor vom Trommeltyp ist,
der Vorlagehalter ein Basisblatt (71) aufweist,
der Speicher (64a) ein an der einen Kante des Grundblattes (71) vorgesehenes Magnetband,
der Schritt (b) den folgenden Schritt aufweist:
(b-1) Aufkleben der Vorlage (1) auf das Grundblatt (71),
der Schritt (c) den folgenden Schritt aufweist:
(c-1) Wickeln des Grundblattes (71) auf eine Trommel (81) in einem Zustand, in dem das Magnetband (64a) so angeordnet ist, daß es die Trommel (81) teilweise oder vollständig umgibt, und
der Schritt (e) den folgenden Schritt aufweist:
(e-1) Drehen der Trommel (81) um eine Trommelachse der Trommel (81), während die Abtastdaten von dem magnetischen Band (64a) mit einem Magnetkopf (38) gelesen werden, der in dem Bildabtaster (19) vom Trommeltyp vorgesehen ist, um die Abtastdaten in dem Bildabtaster (19) vom Trommeltyp zu setzen.

**4.** Bildabtastsystem zum Abtasten eines Bildes einer Vorlage, um das Bild entsprechend Abtastdaten, die einen Abtastzustand zum Lesen des Bildes angeben, zu lesen, wobei das Bildabtastsystem aufweist:
a) einen Vorlagehalter (110), der zum Tragen der Vorlage (1) geeignet ist,
b) Abtastdatenerzeugungsmittel (51, 52) zum Erzeugen der Abtastdaten auf der Grundlage des Bildes und einem von der Bedienperson erstellten Abtastplan und
c) einem Bildabtaster (19) zum Abtasten des Bildes der Vorlage (1), mit
(c-1) Mitteln (20) zum Aufnehmen des die Vorlage (1) tragenden Vorlagehalters (110),
(c-2) Bildabtastmittel (39) zum Abtasten des Bildes der Vorlage (1) das von dem von dem Aufnahmemittel (20) aufgenommenen Vorlagehalter (110) getragen wird, um das Bild jeder Abtastzeile zu lesen,
gekennzeichnet durch
(a-1) einen Speicher (61, 64) in dem Vorlagehalter (110),
(b-1) Datenschreibmittel (51a, 52a), in den Datenerzeugungsmitteln (51, 52) zum Einschreiben der Abtastdaten in die Speicher (61, 64) in dem Vorlagehalter (110),
(c-3) Datenlesemittel (54) zum Lesen von in den Speichermittel (61, 64) in dem Vorlagehalter (110) gespeicherten Abtastdaten und
(c-4) Abtaststeuermitteln (2) zum Steuern der Bildabtastmittel (39) entsprechend den Abtastdaten.

**5.** Bildabtastsystem nach Anspruch 4, dadurch gekennzeichnet, daß
(a-2) der Vorlagehalter (110) Haltemittel (14, 120, 130) zum Tragen der Vorlage (1) aufweist und
(a-3) die Speichermittel (61, 64) an einen Umfangsabschnitt der Haltemittel (14, 120, 130) angebracht sind und zum Speichern der Abtastdaten geeignet sind.

**6.** Bildabtastsystem nach Anspruch 4 oder 5, dadurch gekennzeichnet, daß
der Vorlagehalter (110) weiter aufweist:
(a-4) einen ersten Verbinder (63), der elektrisch mit den Speichermitteln (61) verbunden ist, wobei ein Verbindungsstück des ersten Verbinders von dem äußeren des Vorlagehalters (110) zugänglich ist,
wobei die die Abtastdaten erzeugenden Mittel (51, 52) aufweisen:
(b-2) einen zweiten Verbinder (1a, 2a), der dazu eingerichtet ist, mit dem ersten Verbinder (61) verbunden zu werden, so daß die Abtastdaten von den die Abtastdaten erzeugenden Mittel (51, 52) zu den Speichermitteln (61, 64) durch eine Verbindung des ersten und des zweiten Verbinders (63; 51a, 52a) zugeführt werden, und
wobei die Datenlesemittel (54) aufweisen:
(c-3-1) einen dritten Verbinder, der zur Verbindung mit dem ersten Verbinder (63) geeignet ist, um die Abtastdaten von den Speichermitteln (61, 64) durch eine Verbindung des ersten Verbinders (63) und des dritten Verbinders (54) auszulesen.

**7.** Bildabtastsystem nach Anspruch 5, dadurch gekennzeichnet, daß
die Speichermittel aufweisen:
(a-3-1) ein Magnetband (64a),
die die Abtastdaten erzeugenden Mittel (51, 52) aufweisen:
(b-3) einen ersten Magnetkopf (83) zum Schreiben der Abtastdaten auf das Magnetband (64a), und
die Datenlesemittel (54) aufweisen:
(c-3-2) einen zweiten Magnetkopf (83) zum Auslesen der Abtastdaten auf dem Magnetband (64a).

**8.** Bildabtastsystem nach Anspruch 5, 6 oder 7 dadurch gekennzeichnet, daß
die Haltemittel (14, 120, 130) aufweisen:
(a-2-1) erste und zweite Rahmenelemente (120, 130), die miteinander über ein Scharnier (40) an den jeweiligen Kanten des ersten und des zweiten Rahmenelements verbunden sind, und
(a-2-2) transparente Plattenelemente (14) in Fenster vorgesehen sind, die von dem ersten bzw. dem zweiten Rahmenelement (120, 130) umrahmt sind.

**9.** Bildabtastsystem nach Anspruch 4, dadurch gekennzeichnet, daß
die Aufnahmemittel (20) einen Abtasttisch aufweisen, mit:
(c-1-1) ein hohles Kastenelement mit einem Fenster (w) und
(c-1-2) einen Drehtisch (26), der so in dem Fenster (w) montiert ist, daß er um einen Mittelpunkt des Drehtisches (26) dreht, wobei das Fenster (w) eine Form hat, die der Form des Vorlagehalters (110) entspricht zum Tragen der Vorlage (1), wobei die von dem Vorlagehalter (110) getragene Vorlage (1) in das Fenster (w) eingesetzt und mit dem Drehtisch (16) gedreht werden kann.

**10.** Vorlageabtastsystem nach Anspruch 9, dadurch gekennzeichnet, daß
der Abtasttisch (20) weiter aufweist:
(c-1-3) einen in dem hohlen Kastenelement vorgesehenen Drehantriebsmechanismus (29) zum Drehen des Drehtisches (26) mit einem Motor (30) und
(c-1-4) einen in dem hohlen Kastenelement vorgesehenen Winkeldetektor (32) zum Detektieren eines Drehwinkels des Drehtisches (26) von einer vorgegebenen, auf dem hohlen Kastenelement definierten Richtung.

**11.** Bildabtastsystem nach Anspruch 9 bis 10, dadurch gekennzeichnet, daß
Winkelindices (33) auf dem Abtasttisch (20) um das Fenster (w) herum markiert sind und
eine Indikartionsmarke (34) auf einem Rand des Drehtisches (26) vorgesehen ist, wodurch der Drehwinkel des Drehtisches (26) gefunden werden kann durch Ermittlung, welcher Winkelindex der Winkelindices (33) durch die Indikartionsmarke (34) angegeben wird.

**12.** Bildabtastsystem nach Anspruch 4, dadurch gekennzeichnet, daß
der Vorlagehalter aufweist:
(a-4) einen Trommelkörper (81), um den die Vorlage (1) gewickelt ist und
(a-5) einen Speicher (64a), der auf den Trommelkörper (81) vorgesehen ist und zum Speichern von Abtastdaten geeignet ist.

**13.** Bildabtastsystem nach Anspruch 4, dadurch gekennzeichnet, daß
der Speicher aufweist:
ein Magnetband (64a), das um den Trommelkörper (81) gewunden ist.

FIG. 1

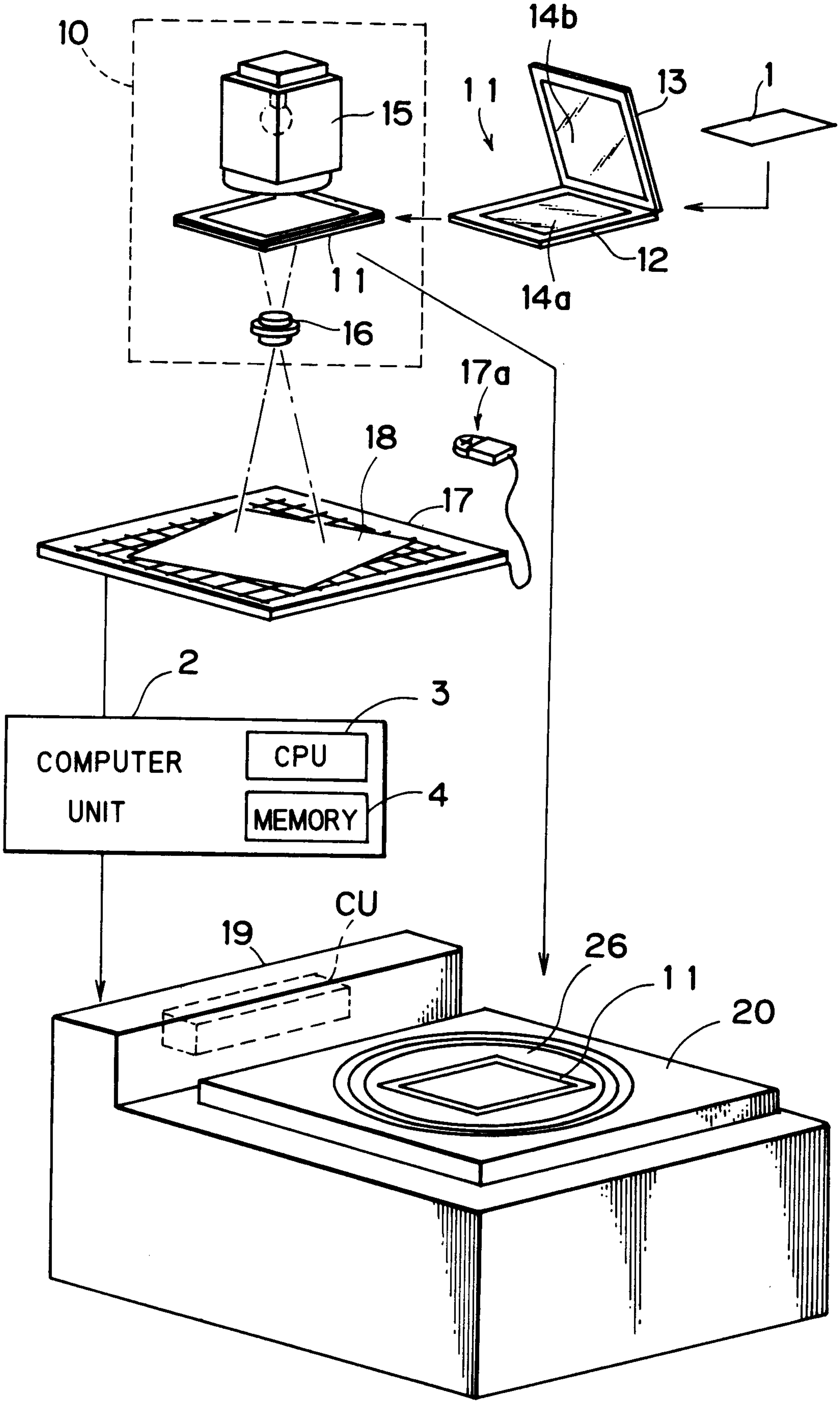
10
15
11
14b
13
1
11
12
14a
16
17a
18
17
2
3
COMPUTER
UNIT
CPU
MEMORY
4
CU
19
26
11
20

FIG. 2

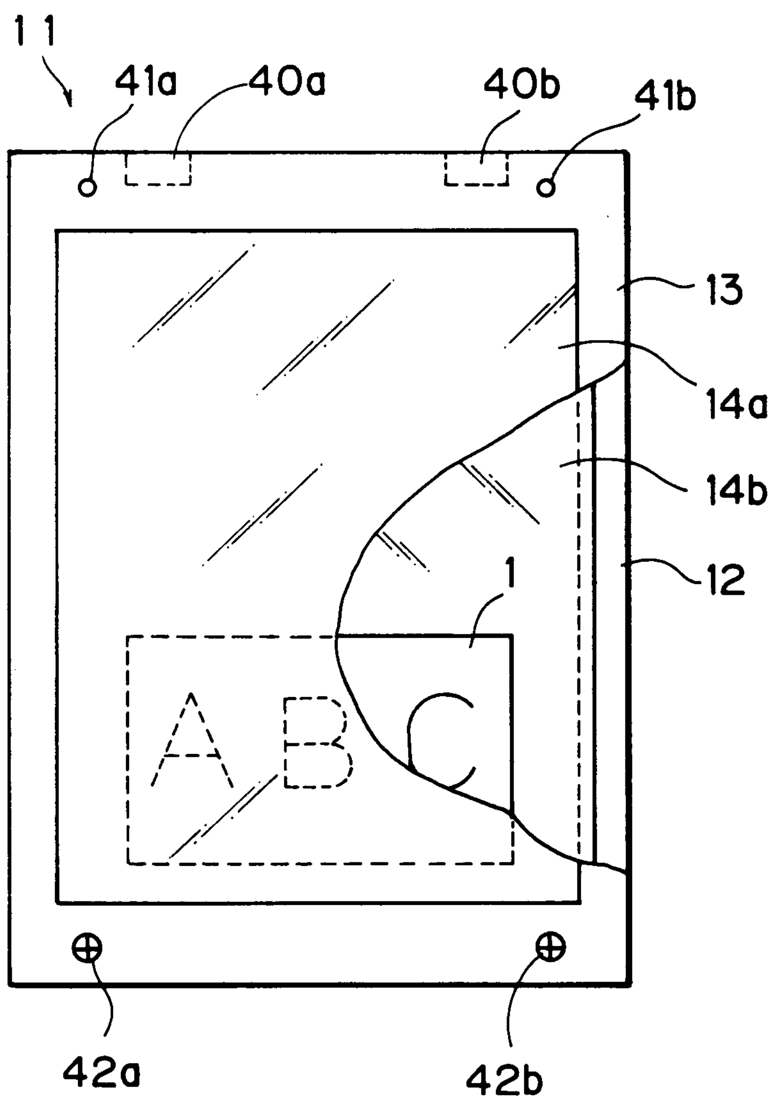

FIG. 3

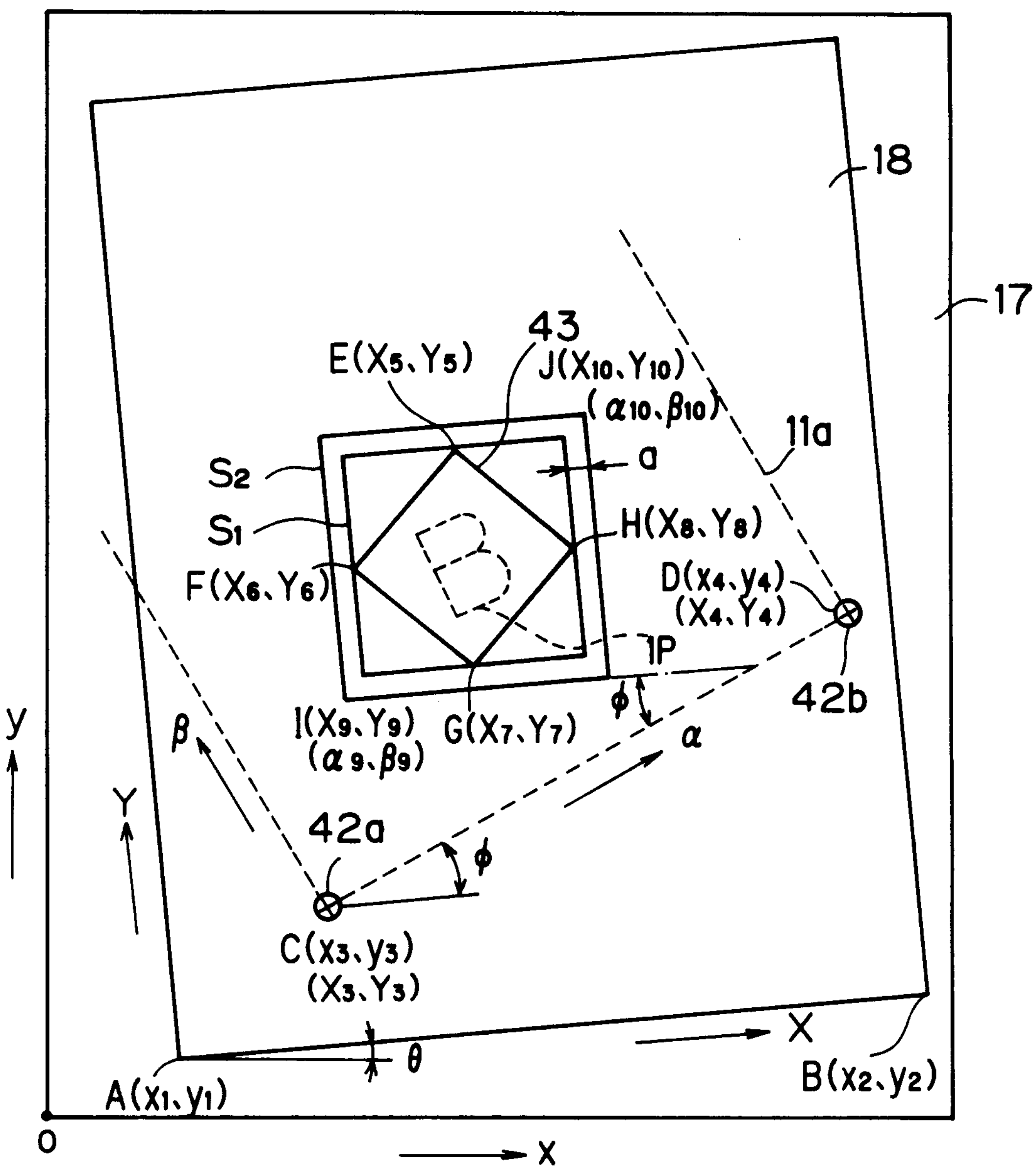
18
17
43
E(X5、Y5)
J(X10、Y10)
(α10、β10)
11a
S2
S1
a
H(X8、Y8)
F(X6、Y6)
D(x4、y4)
(X4、Y4)
1P
42b
y
β
I(X9、Y9)
(α9、β9)
G(X7、Y7)
ϕ
α
Y
42a
ϕ
C(x3、y3)
(X3、Y3)
X
θ
A(x1、y1)
B(x2、y2)
0
x

FIG. 4A

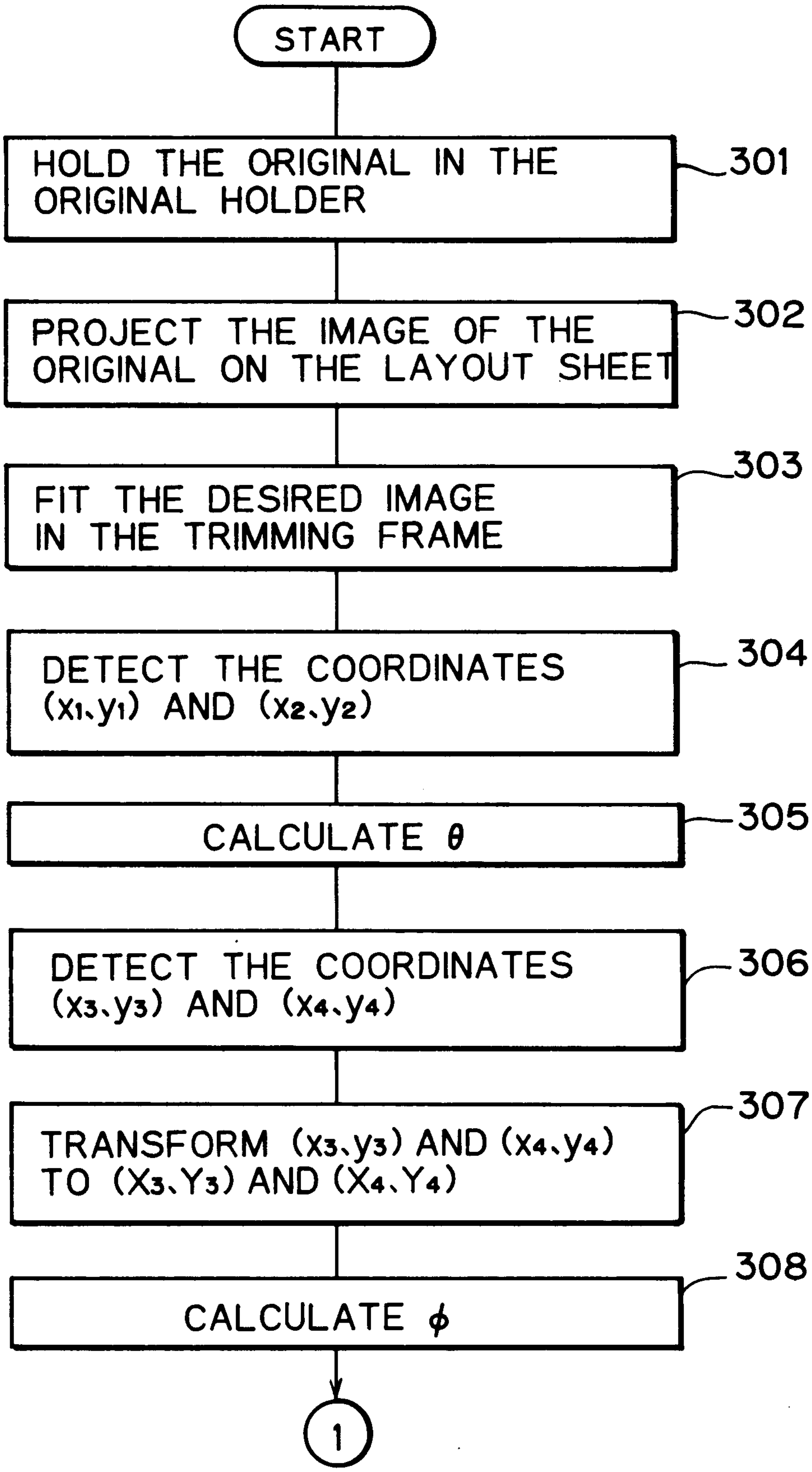
START
HOLD THE ORIGINAL IN THE ORIGINAL HOLDER
301
PROJECT THE IMAGE OF THE ORIGINAL ON THE LAYOUT SHEET
302
FIT THE DESIRED IMAGE IN THE TRIMMING FRAME
303
DETECT THE COORDINATES (x1, y1) AND (x2, y2)
304
CALCULATE θ
305
DETECT THE COORDINATES (x3, y3) AND (x4, y4)
306
TRANSFORM (x3, y3) AND (x4, y4) TO (X3, Y3) AND (X4, Y4)
307
CALCULATE φ
308
1

FIG. 4B

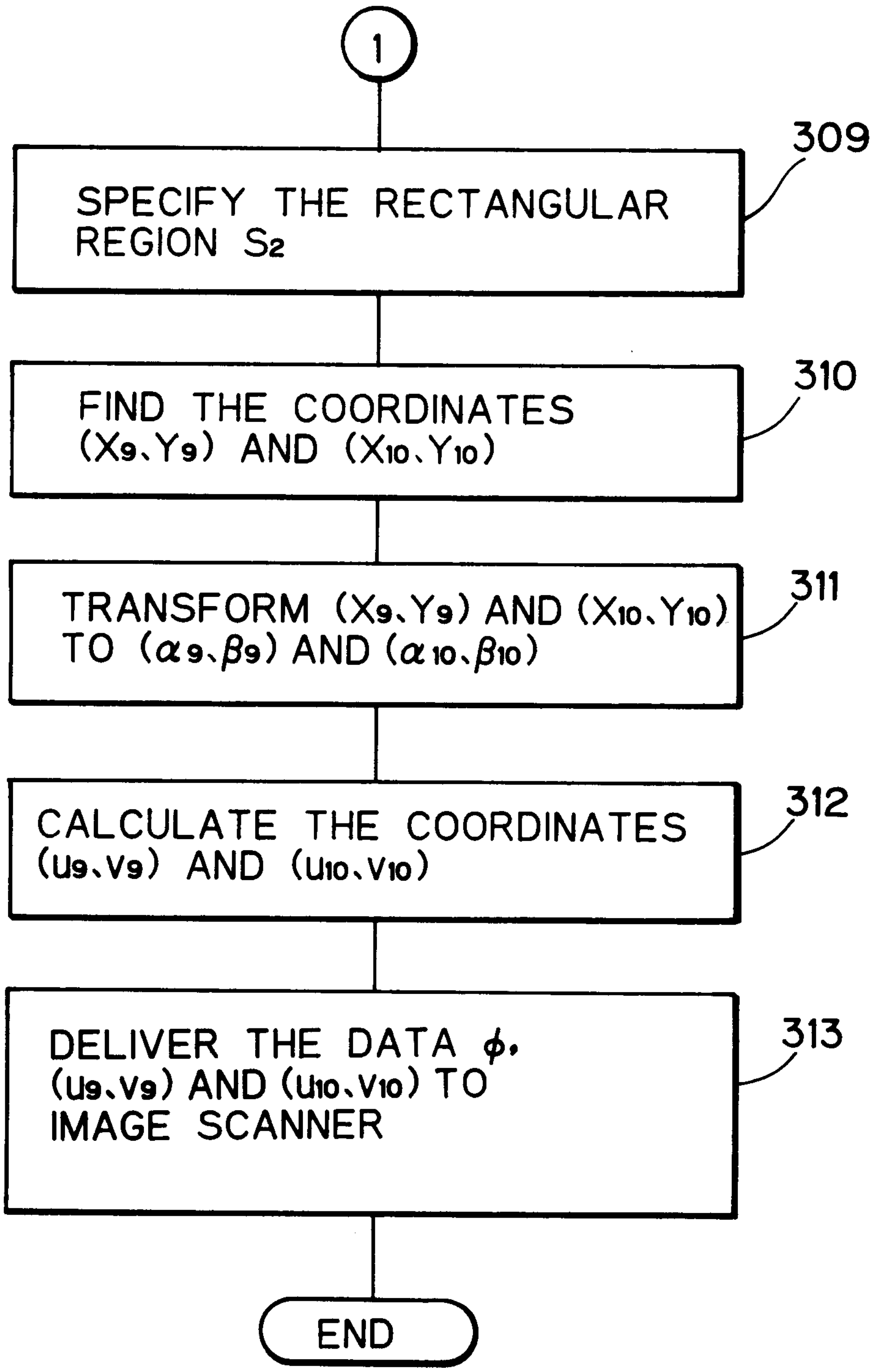
1
309
SPECIFY THE RECTANGULAR REGION S2
310
FIND THE COORDINATES (X9, Y9) AND (X10, Y10)
311
TRANSFORM (X9, Y9) AND (X10, Y10) TO (α9, β9) AND (α10, β10)
312
CALCULATE THE COORDINATES (u9, v9) AND (u10, v10)
313
DELIVER THE DATA φ, (u9, v9) AND (u10, v10) TO IMAGE SCANNER
END

FIG. 5A

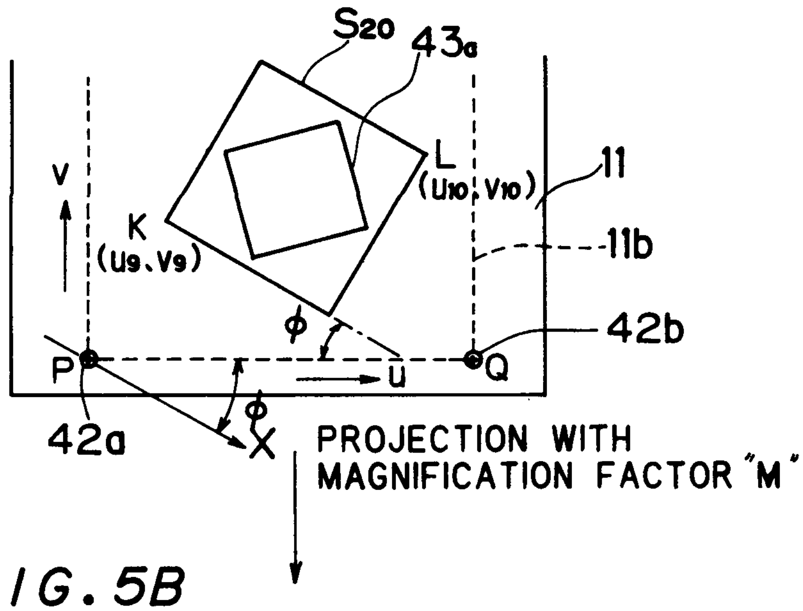
S20
43a
L
(U10, V10)
11
v
K
(U9, V9)
11b
φ
42b
P
u
Q
φ
42a
X
PROJECTION WITH
MAGNIFICATION FACTOR "M"

FIG. 5B

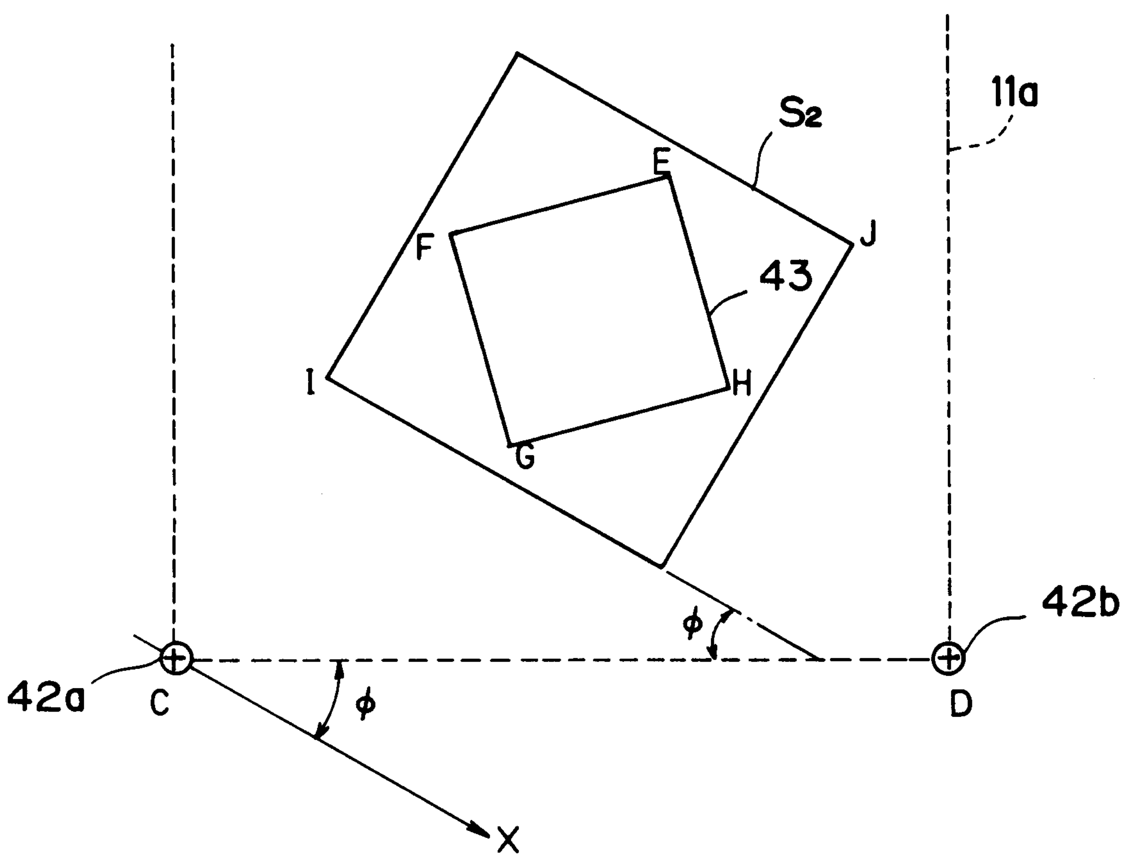
11a
S2
E
J
F
43
I
H
G
φ
42b
42a
C
φ
D
X

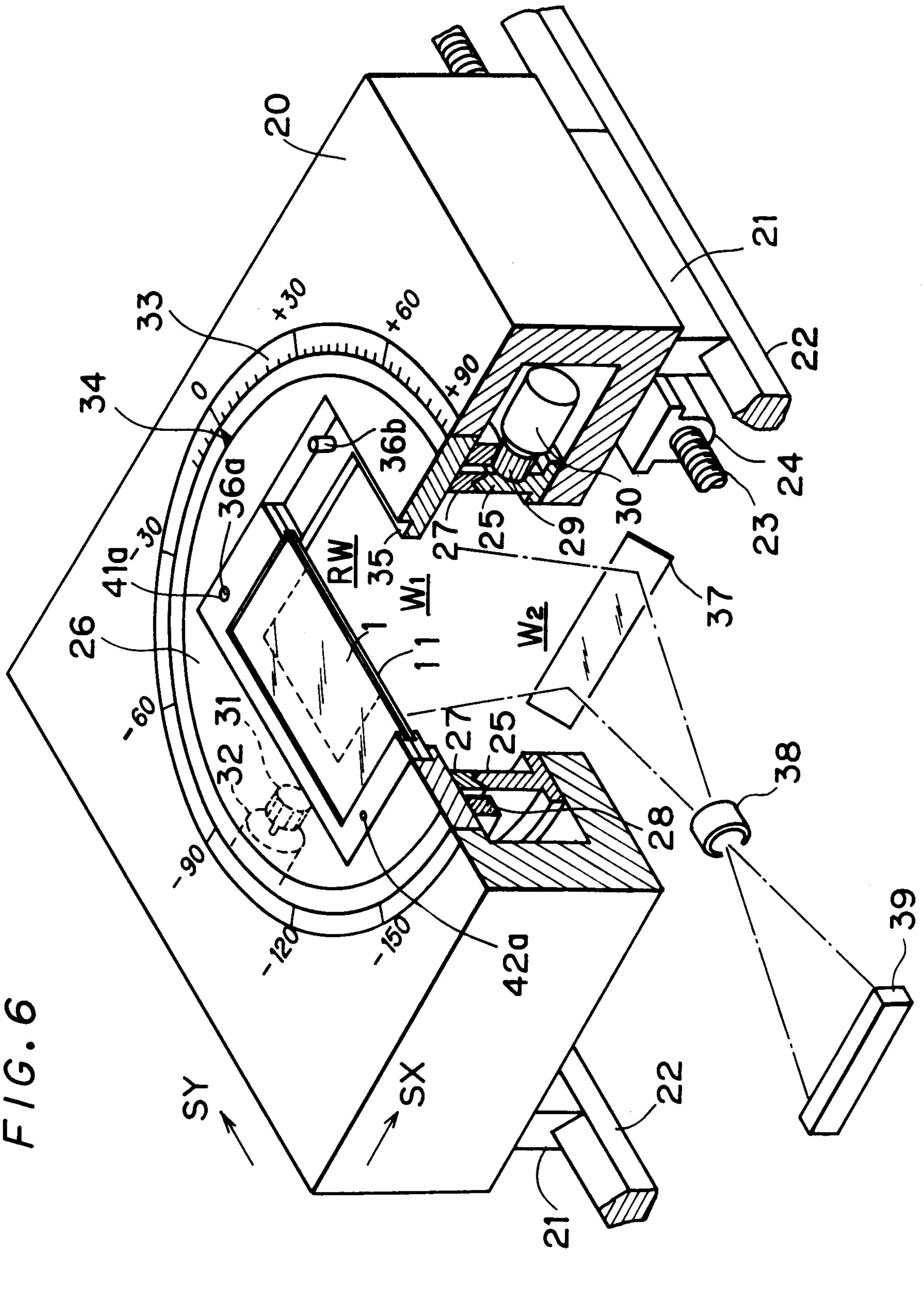

SY
SX
20
21
22
23
24
25
26
27
28
29
30
31
32
33
34
35
36a
36b
37
38
39
41a
42a
1
11
RW
W1
W2
0
+30
+60
+90
-30
-60
-90
-120
-150


FIG. 6

FIG. 7

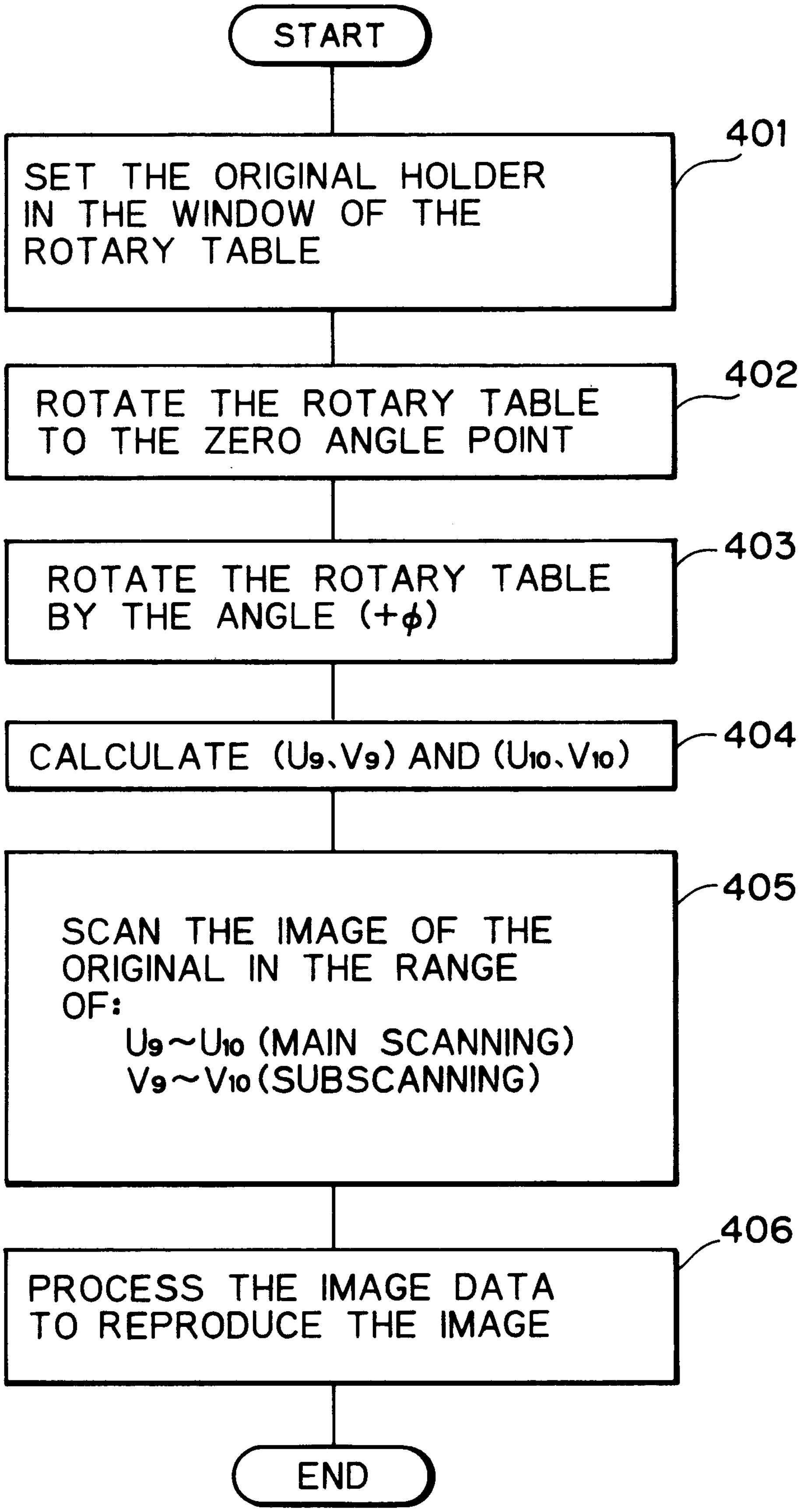
START
SET THE ORIGINAL HOLDER IN THE WINDOW OF THE ROTARY TABLE
401
ROTATE THE ROTARY TABLE TO THE ZERO ANGLE POINT
402
ROTATE THE ROTARY TABLE BY THE ANGLE (+φ)
403
CALCULATE (U9, V9) AND (U10, V10)
404
SCAN THE IMAGE OF THE ORIGINAL IN THE RANGE OF:
U9~U10 (MAIN SCANNING)
V9~V10 (SUBSCANNING)
405
PROCESS THE IMAGE DATA TO REPRODUCE THE IMAGE
406
END

FIG. 8

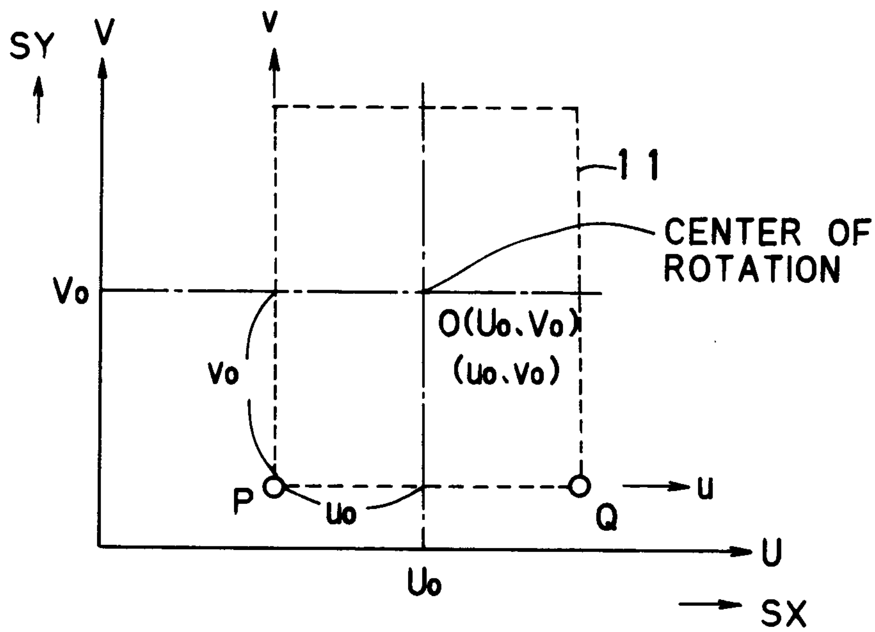
SY
V
v
11
CENTER OF ROTATION
Vo
O(Uo, Vo)
(uo, vo)
vo
P
uo
Q
u
U
Uo
SX

FIG. 9

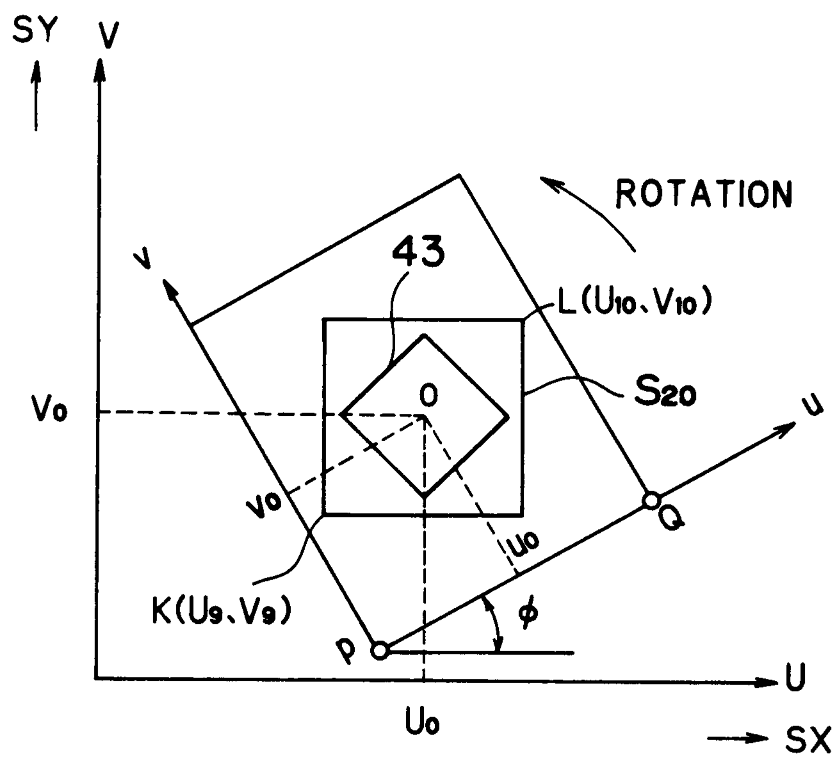
SY
V
ROTATION
v
43
L(U10, V10)
Vo
O
S20
u
vo
Q
uo
K(U9, V9)
φ
P
U
Uo
SX

FIG. 10

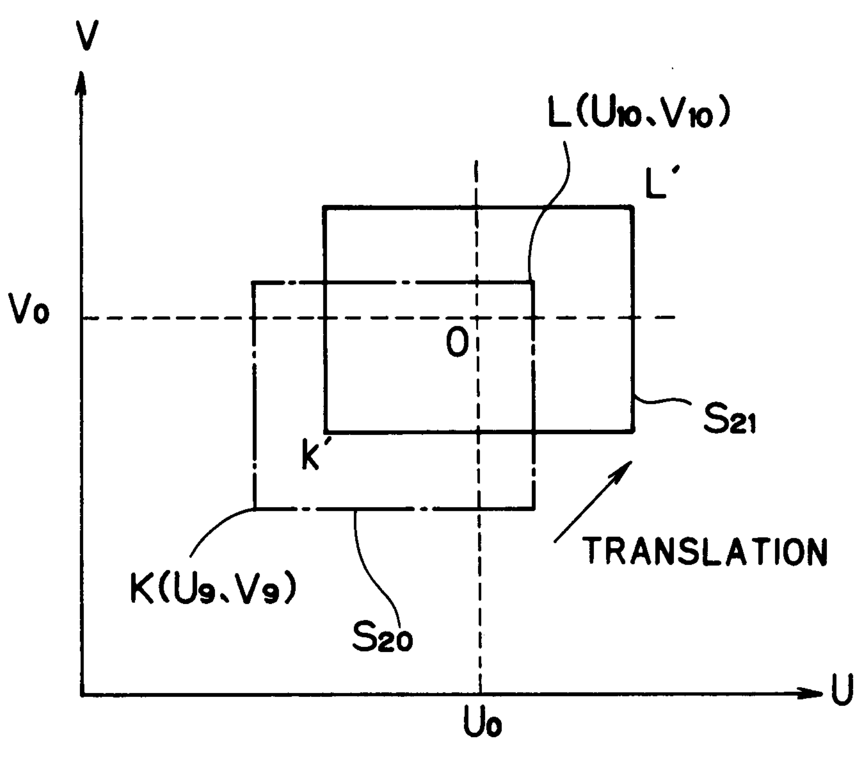

FIG. 11

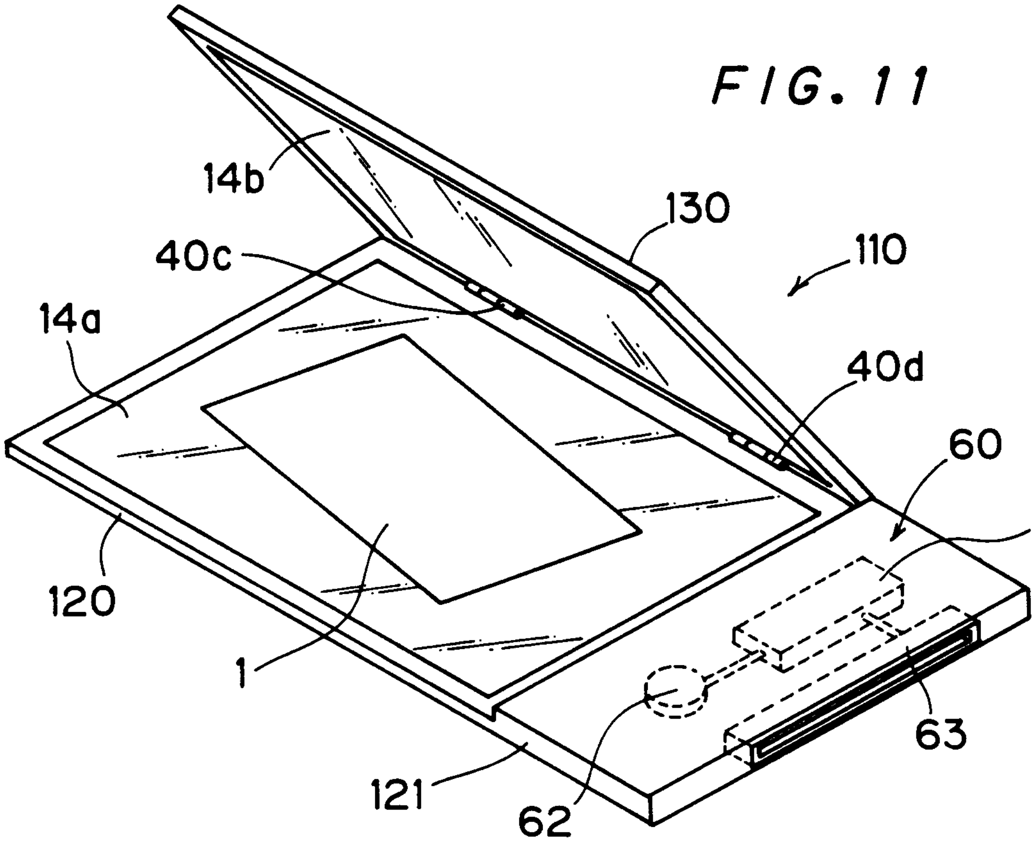
14b
130
110
40c
14a
40d
60
61
120
1
63
121
62

FIG. 13

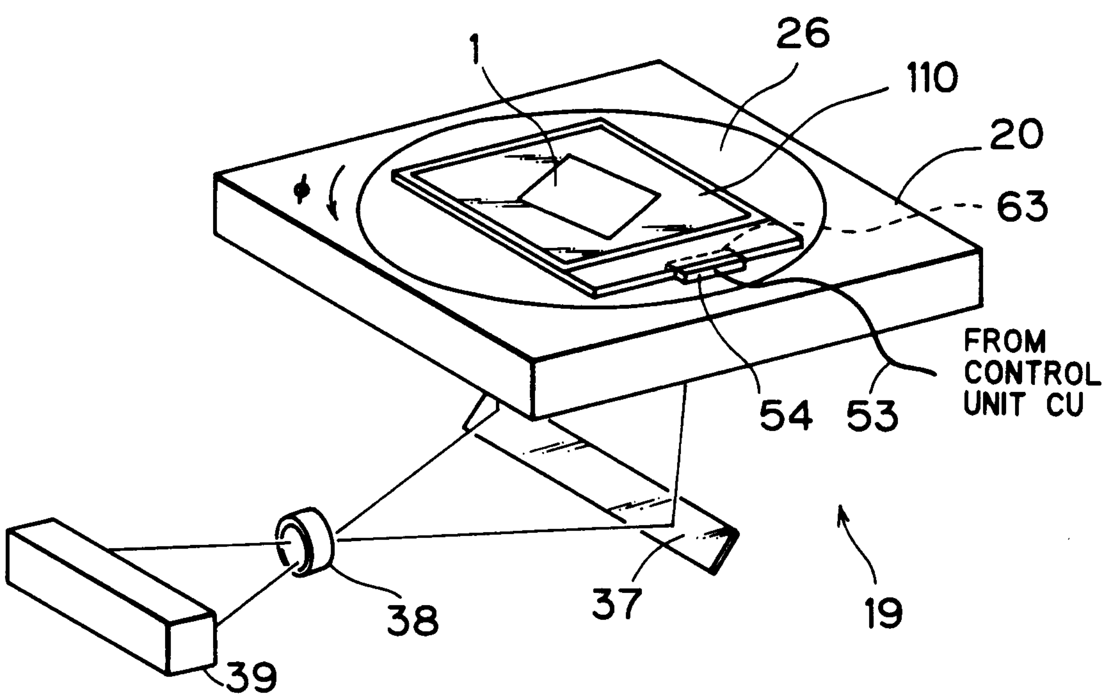
1
26
110
20
φ
63
FROM
CONTROL
UNIT CU
54
53
38
37
19
39

FIG. 12

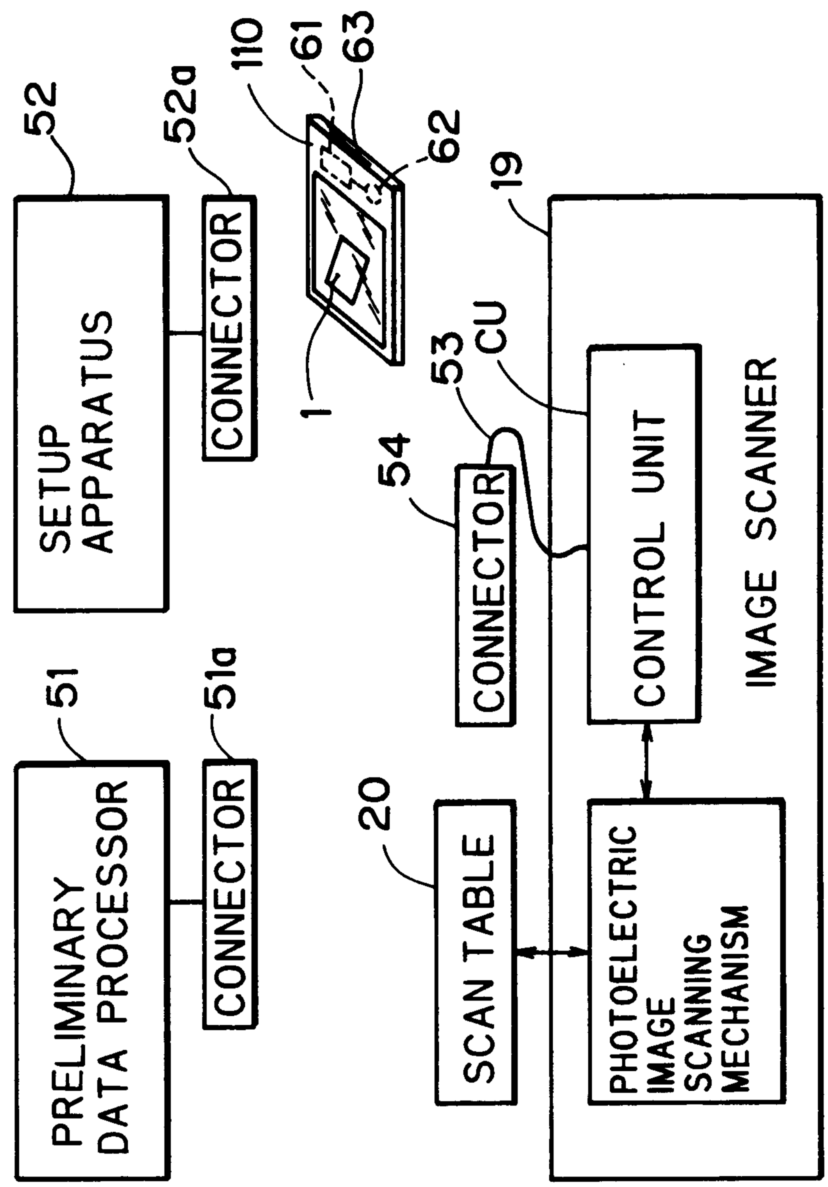
PRELIMINARY DATA PROCESSOR
51
CONNECTOR
51a
SETUP APPARATUS
52
CONNECTOR
52a
110
61
63
62
1
53
CU
54
CONNECTOR
19
CONTROL UNIT
IMAGE SCANNER
20
SCAN TABLE
PHOTOELECTRIC IMAGE SCANNING MECHANISM

FIG. 14

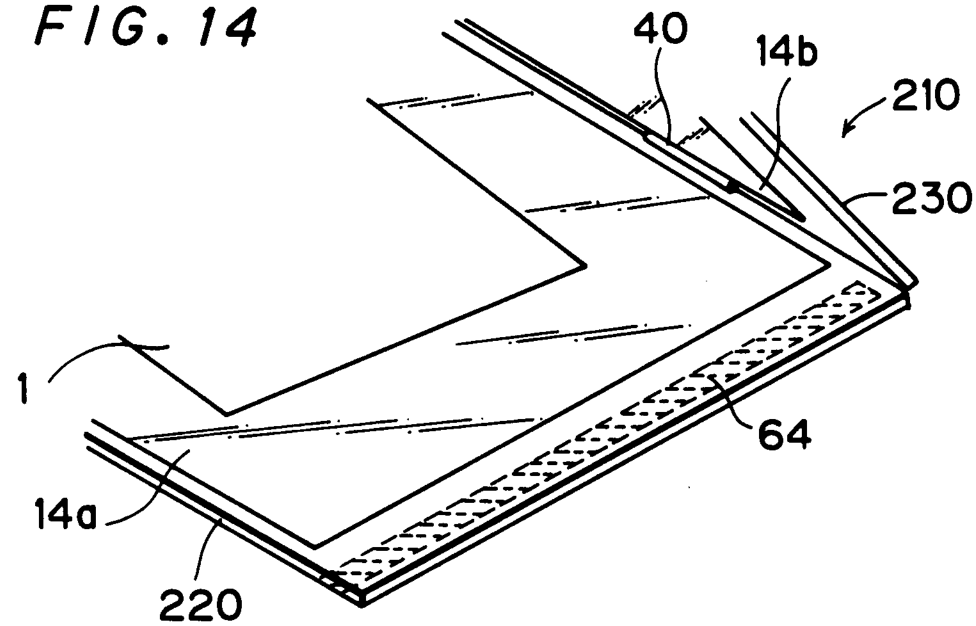
40
14b
210
230
1
64
14a
220

FIG. 15

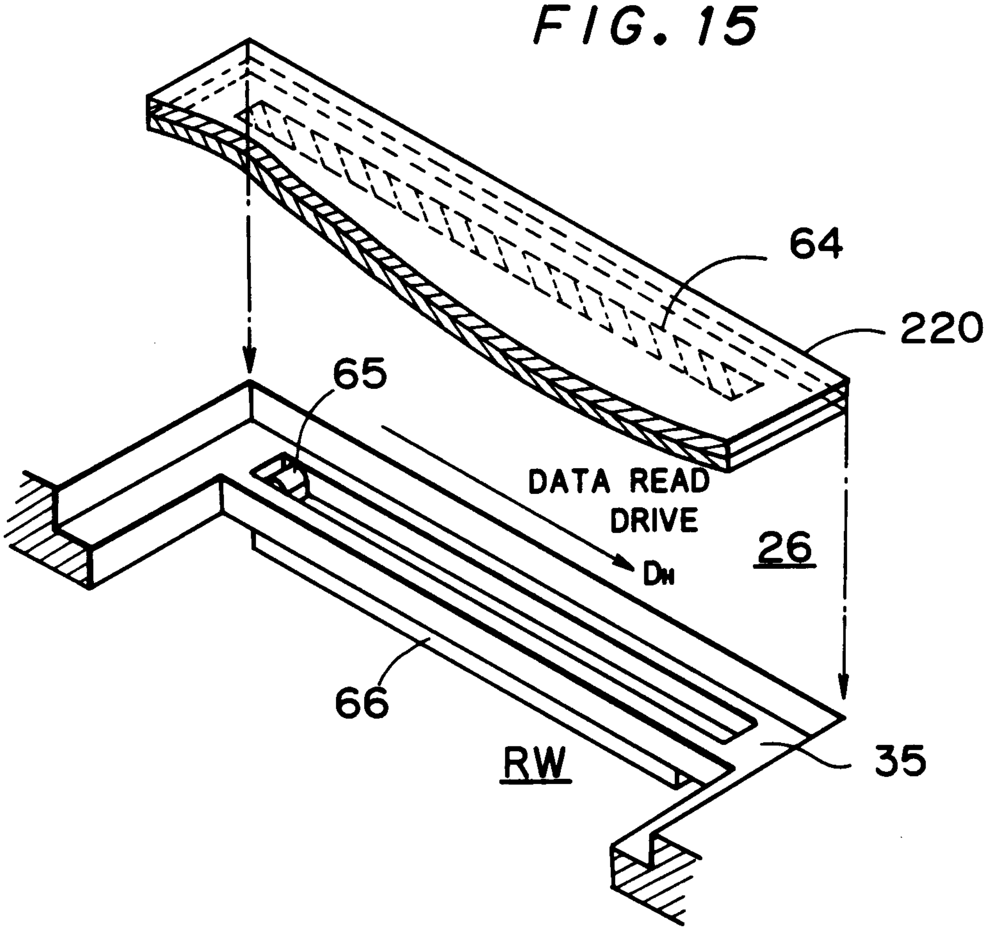
64
220
65
DATA READ
DRIVE
DH
26
66
RW
35

FIG. 16

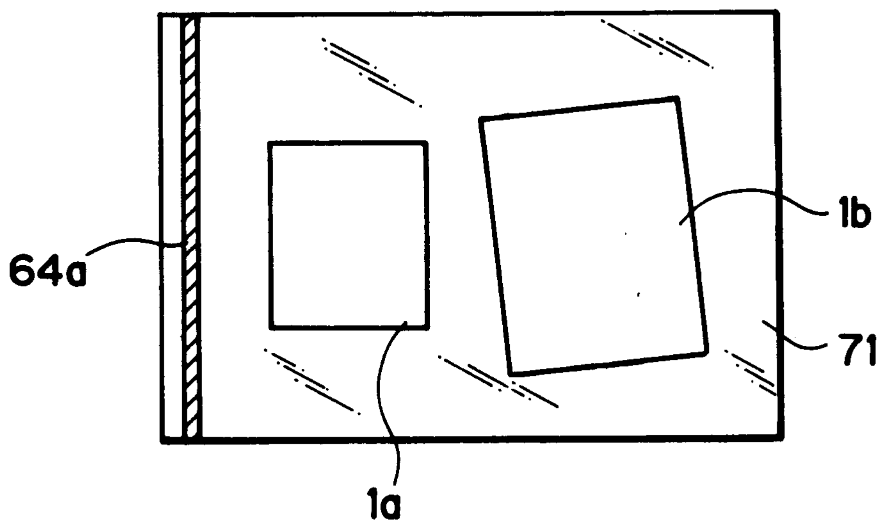


FIG. 17